# EUROPÄISCHE PATENTSCHRIFT

(11) **EP 3 487 184 B1**
(45) Veröffentlichungstag und Bekanntmachung des Hinweises auf die Patenterteilung: **08.12.2021**
(21) Anmeldenummer: 18207218.1
(22) Anmeldetag: 20.11.2018
(51) Int. Cl.: H04Q 9/00

(54) **VERBRAUCHSWERTSENDEEINHEIT UND VERFAHREN ZU DEREN BETRIEB, VERBRAUCHSWERTEMPFANGSEINHEIT UND VERFAHREN ZU DEREN BETRIEB SOWIE SENDER-EMPFÄNGER-ANORDNUNG UND VERFAHREN ZU DEREN BETRIEB**
CONSUMPTION VALUE TRANSMITTING UNIT AND METHOD FOR THE OPERATION THEREOF, CONSUMPTION VALUE RECEIVING UNIT AND METHOD FOR OPERATING THEREOF AND TRANSCEIVER ARRANGEMENT AND METHOD FOR THE OPERATION THEREOF
UNITÉ ÉMETTRICE DE LA VALEUR DE CONSOMMATION ET SON PROCÉDÉ DE FONCTIONNEMENT, UNITÉ RÉCEPTRICE DE LA VALEUR DE CONSOMMATION ET SON PROCÉDÉ DE FONCTIONNEMENT AINSI QUE DISPOSITIF ÉMETTEUR-RÉCEPTEUR ET SON PROCÉDÉ DE FONCTIONNEMENT

(30) Priorität: 20.11.2017 DE 102017127241
(43) Veröffentlichungstag der Anmeldung: 22.05.2019
(73) Patentinhaber: QUNDIS GmbH, 99098 Erfurt (DE)
(72) Erfinder: Leipold, Dr. Jörg, 99974 Mühlhausen (DE); Pahl, Uwe, 99974 Mühlhausen (DE)
(74) Vertreter: Liedtke & Partner Patentanwälte

(56) Entgegenhaltungen:
- EP-A2- 1 180 909
- DE-A1- 10 213 114

## Beschreibung

Die Erfindung betrifft eine Verbrauchswertsendeeinheit, ein Verfahren zu deren Betrieb, eine Verbrauchswertempfangseinheit, ein Verfahren zu deren Betrieb sowie eine Sender-Empfänger-Anordnung und ein Verfahren zu deren Betrieb.

Aus dem Stand der Technik sind Verbrauchswerterfassungsnetzwerke mit Verbrauchswertsendeeinheiten und mindestens einer Verbrauchswertempfangseinheit allgemein bekannt. Während einer Installationsphase des Verbrauchswerterfassungsnetzwerks, d. h. zu dessen Aufbau, senden die Verbauchswertsendeeinheiten in einer Installationsbetriebsart jeweils in großen Zeitabständen Installationstelegramme, um sich bei der Verbrauchswertempfangseinheit als Mitglied des Verbrauchswerterfassungsnetzwerks anzumelden. Die Verbrauchswertempfangseinheit ist während der gesamten Installationsphase permanent offen, d. h. die Verbrauchswertempfangseinheit befindet sich während der gesamten Installationsphase ununterbrochen auf Empfang, d. h. in Empfangsbereitschaft.

In der DE 102 13 114 A1 wird ein Verfahren zur periodischen Funkübertragung der Messdaten einer Mehrzahl von Messgeräten auf einen gemeinsamen Empfänger beschrieben. Die Messgeräte senden die Messdaten periodisch in einem Zeitfenster. Der Empfänger befindet sich zum Empfang der gesendeten Messdaten in Empfangsbereitschaft. Der Empfänger wird nur in einem Zeitfenster in Empfangsbereitschaft versetzt, wenn die Übertragung der Messdaten eines bestimmten Messgerätes erwartet wird, um die Stromaufnahme im Empfänger zu verringern. Um die Synchronisation zwischen Sender und Empfänger einzuleiten, muss eine Initialisierungsphase, d. h. ein Start der Synchronisation, stattfinden. Diese wird typischerweise nach der Installation gestartet. Der Empfänger ist für eine längere Zeit beispielsweise alle 30 sec im Minimum für die Dauer der doppelten Länge des Synchronisationstelegramms plus der Pause zwischen zwei aufeinanderfolgenden Synchronisationstelegrammen geöffnet. Es können dabei drei Initialisierungsmethoden unterschieden werden. Eine vollautomatische Initialisierungsmethode sieht vor, dass die Sender beim Installieren eine spezielle Kennung mitsenden, welche vom Empfänger erkannt wird. Die Initialisierung dauert eine definierte Zeit. Die Sender senden beim Installieren für eine bestimmte Zeit häufiger. Eine halbautomatische Initialisierungsmethode sieht vor, dass die zu erwartende Gerätezahl übergeben wird. Ansonsten erfolgt der Vorgang wie bei dem zuvor beschriebenen vollautomatischen Vorgang. Eine manuelle Initialisierungsmethode sieht schließlich vor, dass dem Empfänger die zu empfangenden Geräte mitgeteilt werden. Die Initialisierung beginnt nach dem Installieren des Empfängers. Sie dauert so lange, bis alle Geräte erkannt wurden oder bis zum Ablauf eines Timeouts.

Aus der EP 1 180 909 A2 sind ein Verfahren und eine Vorrichtung zur Datenerfassung bekannt. Die Vorrichtung zur Datenerfassung von Daten dezentral angeordneter Datenerfassungsgeräte umfasst mindestens ein Datenerfassungsgerät und mindestens eine Zwischenstation. Es werden Daten mittels des Datenerfassungsgeräts erfasst und über mindestens eine Zwischenstation an eine zentrale Datensammelstelle weitergeleitet. Die Daten werden in vorbestimmbaren Zeitabständen und während eines vorbestimmbaren Zeitfensters von dem Datenerfassungsgerät übertragen. Das mindestens eine Datenerfassungsgerät wird der mindestens einen Zwischenstation automatisch zugeordnet. Die mindestens eine Zwischenstation wird nur während des vorbestimmbaren Zeitfensters und nach dem vorbestimmbaren Zeitabstand des jeweiligen der Zwischenstation zugeordneten Datenerfassungsgeräts auf Datenempfang geschaltet. Zum Aufbau eines Netzwerks bestehen zwischen mehreren Zwischenstationen bidirektionale zweite Kommunikationswege, wobei sich die mehreren Zwischenstationen zum Aufbau eines Netzwerks Geräteadressen und eine Netzwerkadresse selbständig zuordnen.

Der Erfindung liegt die Aufgabe zu Grunde, eine gegenüber dem Stand der Technik verbesserte Verbrauchswertsendeeinheit, ein gegenüber dem Stand der Technik verbessertes Verfahren zu deren Betrieb, eine gegenüber dem Stand der Technik verbesserte Verbrauchswertempfangseinheit, ein gegenüber dem Stand der Technik verbessertes Verfahren zu deren Betrieb sowie eine gegenüber dem Stand der Technik verbesserte Sender-Empfänger-Anordnung und ein gegenüber dem Stand der Technik verbessertes Verfahren zu deren Betrieb anzugeben.

Die Aufgabe wird erfindungsgemäß gelöst durch eine Verbrauchswertsendeeinheit mit den Merkmalen des Anspruchs 1, ein Verfahren zu deren Betrieb mit den Merkmalen des Anspruchs 3, eine Verbrauchswertempfangseinheit mit den Merkmalen des Anspruchs 5, ein Verfahren zu deren Betrieb mit den Merkmalen des Anspruchs 6 sowie eine Sender-Empfänger-Anordnung mit den Merkmalen des Anspruchs 7 und ein Verfahren zu deren Betrieb mit den Merkmalen des Anspruchs 10.

Vorteilhafte Ausgestaltungen der Erfindung sind Gegenstand der Unteransprüche.

Eine erfindungsgemäße Verbrauchswertsendeeinheit, insbesondere Verbrauchswerterfassungseinheit und/oder Verbrauchswertweiterleitungseinheit, ist dazu ausgebildet, in einer Installationsbetriebsart, insbesondere während der Installation der Verbrauchswertsendeeinheit in ein Verbrauchswerterfassungsnetzwerk, vorteilhafterweise in einer Installationsphase des Verbrauchswerterfassungsnetzwerks, Ankündigungstelegramme in einem Zeitabstand von jeweils maximal 25 Sekunden zu senden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, und nach dem Senden eines Ankündigungstelegramms oder mehrerer Ankündigungstelegramme mindestens ein dadurch, d. h. durch das eine Ankündigungstelegramms oder die mehreren Ankündigungstelegramme, angekündigtes Installationstelegramm oder mehrere solcher durch das eine Ankündigungstelegramms oder die mehreren Ankündigungstelegramme angekündigten Installationstelegramme zu senden. Zweckmäßigerweise beginnt der jeweilige Zeitabstand mit einem Beginn des Sendens eines jeweiligen Ankündigungstelegramms und endet mit einem Beginn des Sendens des jeweiligen nächsten Ankündigungstelegramms, d. h. nach dem jeweiligen Zeitabstand ab dem Beginn des Sendens eines jeweiligen Ankündigungstelegramms beginnt das Senden des jeweiligen nächsten Ankündigungstelegramms. Die Ankündigungstelegramme kündigen ein nachfolgendes Senden mindestens eines Installationstelegramms an. Dabei kann vorgesehen sein, dass jeweils ein Ankündigungstelegramm das Senden jeweils eines Installationstelegramms ankündigt, oder dass mehrere Ankündigungstelegramme das Senden eines Installationstelegramms, d. h. desselben Installationstelegramms, oder mehrerer Installationstelegramme, d. h. derselben Installationstelegramme, ankündigen. Vorteilhafterweise ist vorgesehen, dass auf die oben beschriebene Weise mehrere Ankündigungstelegramme gesendet werden, welche das nachfolgende Senden eines, insbesondere desselben, Installationstelegramms, oder mehrerer, insbesondere derselben, Installationstelegramme, ankündigen, und danach dieses durch diese Ankündigungstelegramme angekündigte Installationstelegramm gesendet wird oder diese durch diese Ankündigungstelegramme angekündigten Installationstelegramme gesendet werden. Vorteilhafterweise wiederholt sich dies mindestens einmal oder mehrere Male, d. h. nach dem Senden des angekündigten Installationstelegramms oder der angekündigten Installationstelegramme werden erneut auf die oben beschriebene Weise mehrere Ankündigungstelegramme gesendet, welche das nachfolgende Senden eines, insbesondere desselben, Installationstelegramms, oder mehrerer, insbesondere derselben, Installationstelegramme, ankündigen, und danach wird dieses durch diese Ankündigungstelegramme angekündigte Installationstelegramm oder werden diese durch diese Ankündigungstelegramme angekündigten Installationstelegramme gesendet. Diese Vorgehensweise kann sich noch einmal oder noch mehrere Male wiederholen. Beispielsweise werden durch die Verbrauchswertsendeeinheit mehrere derartige Sequenzen, beispielsweise sechs bis acht derartige Sequenzen, aus mehreren Ankündigungstelegrammen und einem angekündigten Installationstelegramm oder mehreren angekündigten Installationstelegrammen gesendet.

Die erfindungsgemäße Verbrauchswertsendeeinheit ist besonders vorteilhaft während einer Installationsphase eines Verbrauchswerterfassungsnetzwerks, d. h. insbesondere während der Installation der Verbrauchswertsendeeinheit in das Verbrauchswerterfassungsnetzwerk, welches zumindest eine Verbrauchswertempfangseinheit umfasst. Während einer solchen Installationsphase des Verbrauchswerterfassungsnetzwerks, d. h. zu dessen Aufbau, sendet die jeweilige Verbrauchswertsendeeinheit in der Installationsbetriebsart auf die beschriebene Weise, d. h. in im Vergleich zum Stand der Technik wesentlich kürzeren Zeitabständen, die Ankündigungstelegramme, welche das nachfolgende Senden eines Installationstelegramms oder mehrerer Installationstelegramme ankündigen, das bzw. die gesendet wird/werden, um sich bei der Verbrauchswertempfangseinheit als Mitglied des Verbrauchswerterfassungsnetzwerks anzumelden, wodurch die Verbrauchswertsendeeinheit in das Verbrauchswerterfassungsnetzwerk installiert wird. Während dieser Installationsphase erfolgt insbesondere ein initialer Aufbau einer Kommunikationsverbindung der jeweiligen Verbrauchswertsendeeinheit mit der Verbrauchswertempfangseinheit und somit eine Einbindung in das Verbrauchswerterfassungsnetzwerk mit der Verbrauchswertempfangseinheit. Das Senden des Installationstelegramms oder der Installationstelegramme, insbesondere angekündigt durch die Ankündigungstelegramme, ermöglicht dabei die Installation der jeweiligen Vebrauchswertsendeeinheit in das Verbrauchswerterfassungsnetzwerk.

Durch das Senden der Ankündigungstelegramme in den beschriebenen kurzen Zeitabständen, welche das nachfolgende Senden eines Installationstelegramms oder mehrerer Installationstelegramme, insbesondere desselben Installationstelegramms oder derselben Installationstelegramme, ankündigen, muss die Verbrauchswertempfangseinheit, im Unterschied zum Stand der Technik, nicht während der gesamten Installationsphase ununterbrochen in Empfangsbereitschaft sein, um die Ankündigungstelegramme und danach das mindestens eine Installationstelegramm oder die Installationstelegramme zu empfangen, sondern es wird ermöglicht, die Empfangsbereitschaft der Verbrauchswertempfangseinheit während der Installationsphase des Verbrauchswerterfassungsnetzwerks und somit in einer Installationsbetriebsart der Verbrauchswertempfangseinheit mehrfach abwechselnd einzuschalten und wieder auszuschalten. D. h. die Verbrauchswertempfangseinheit ist dann, bevorzugt in größeren Zeitscheiben, alternierend geöffnet oder schlafend.

Die Ankündigungstelegramme kündigen der Verbrauchswertempfangseinheit das folgende Senden eines Installationstelegramms oder mehrerer Installationstelegramme durch die Verbrauchswertsendeeinheit an, vorteilhafterweise nach einer vorgegebenen Zeit nach dem Ankündigungstelegramm, insbesondere nach dem jeweiligen Ankündigungstelegramm, und/oder zu einem vorgegebenen Zeitpunkt. Dies wird der Verbrauchswertempfangseinheit zweckmäßigerweise durch das Ankündigungstelegramm mitgeteilt. Wird durch das jeweilige Ankündigungstelegramm das Senden des Installationstelegramms nach einer vorgegebenen Zeit nach dem jeweiligen Ankündigungstelegramm angekündigt und kündigen mehrere Ankündigungstelegramme das Senden desselben Installationstelegramms an, so wird die vorgegebene Zeit im jeweiligen Ankündigungstelegramm zweckmäßigerweise entsprechend derart angepasst, dass sich aus allen Ankündigungstelegrammen, welche das Senden des selben Installationstelegramms ankündigen, derselbe Zeitpunkt ergibt, zu welchem das angekündigte Installationstelegramm gesendet wird. Hat die Verbrauchswertempfangseinheit ein solches Ankündigungstelegramm oder mindestens ein solches Ankündigungstelegramm empfangen, ist sie danach für das mindestens eine angekündigte von der Verbrauchswertsendeeinheit gesendete Installationstelegramm in Empfangsbereitschaft, beispielsweise indem sie nach dem Empfang des Ankündigungstelegramms oder des mindestens einen Ankündigungstelegramms in Empfangsbereitschaft bleibt, mindestens bis sie das angekündigte Installationstelegramm empfangen hat oder, beispielsweise aus Sicherheitsgründen, mehreren Installationstelegramme empfangen hat oder für einen vorgegebenen Zeitraum, oder indem sie derart in Empfangsbereitschaft geschaltet wird, dass sie sich nach der vorgegebenen Zeit nach dem Empfang des Ankündigungstelegramms oder des mindestens einen Ankündigungstelegramms oder zu dem vorgegebenen Zeitpunkt in Empfangsbereitschaft befindet.

Sendet die Verbrauchswertsendeeinheit somit auf die oben beschriebene Weise Ankündigungstelegramme, so sendet sie beispielsweise nach jedem Ankündigungstelegramm das durch dieses Ankündigungstelegramm angekündigte Installationstelegramm oder die mehreren angekündigten Installationstelegramme, vorteilhafterweise nach der vorgegebenen Zeit nach dem Ankündigungstelegramm und/oder zu dem vorgegebenen Zeitpunkt, wie der Verbrauchswertempfangseinheit zweckmäßigerweise durch das Ankündigungstelegramm mitgeteilt. Alternativ ist vorgesehen, dass, wenn die Verbrauchswertsendeeinheit somit auf die oben beschriebene Weise Ankündigungstelegramme sendet, sie beispielsweise nach mehreren Ankündigungstelegrammen das durch diese Ankündigungstelegramme angekündigte Installationstelegramm oder die mehreren durch diese Ankündigungstelegramme angekündigten Installationstelegramme sendet, vorteilhafterweise nach der vorgegebenen Zeit nach dem jeweiligen Ankündigungstelegramm und/oder zu dem vorgegebenen Zeitpunkt, wie der Verbrauchswertempfangseinheit zweckmäßigerweise durch das jeweilige Ankündigungstelegramm mitgeteilt. Die Verbrauchswertempfangseinheit muss nur eines dieser Ankündigungstelegramme empfangen, um mitgeteilt zu bekommen, wann das dadurch angekündigte mindestens eine Installationstelegramm gesendet wird oder die mehreren Installationstelegramme gesendet werden.

Dabei kann das Senden des angekündigten Installationstelegramms oder der angekündigten Installationstelegramme in dem oben beschriebenen Zeitabstand zum Ankündigungstelegramm erfolgen, so dass dann im Wechsel, d. h. abwechselnd, Ankündigungstelegramme und Installationstelegramme gesendet werden, wobei beispielsweise abwechselnd ein Ankündigungstelegramm und ein Installationstelegramm im oben angegebenen Zeitabstand gesendet werden oder wobei mehrere Ankündigungstelegramme, die dasselbe Installationstelegramm oder dieselben Installationstelegramme ankündigen, im oben angegebenen Zeitabstand gesendet werden, danach das durch diese Ankündigungstelegramme angekündigte Installationstelegramm gesendet wird oder die durch diese Ankündigungstelegramme angekündigte Installationstelegramm gesendet werden, und danach beispielsweise erneut mehrere Ankündigungstelegramme, die dasselbe Installationstelegramm oder dieselben Installationstelegramme ankündigen, im oben angegebenen Zeitabstand gesendet werden und danach das durch diese Ankündigungstelegramme angekündigte Installationstelegramm gesendet wird oder die durch diese Ankündigungstelegramme angekündigte Installationstelegramm gesendet werden. Dies kann sich einmal oder mehrere Male wiederholen. Beispielsweise werden durch die Verbrauchswertsendeeinheit sechs bis acht derartige Sequenzen aus mehreren Ankündigungstelegrammen und einem angekündigten Installationstelegramm oder mehreren angekündigten Installationstelegrammen gesendet.

Alternativ werden die Ankündigungstelegramme im oben beschriebenen Zeitabstand gesendet und das durch das jeweilige Ankündigungstelegramm angekündigte Installationstelegramm oder die durch das jeweilige Ankündigungstelegramm angekündigten Installationstelegramme wird/werden zwischen dem Ankündigungstelegramm, welches das jeweilige Installationstelegramm oder die jeweiligen Installationstelegramme ankündigt, und dem jeweils nachfolgenden Ankündigungstelegramm gesendet und somit in einem von dem oben angegebenen Zeitabstand abweichenden Zeitabstand zum Ankündigungstelegramm, durch welches das jeweilige Installationstelegramm angekündigt wird oder die jeweiligen Installationstelegramme angekündigt werden. Somit werden auch bei dieser Variante abwechselnd Ankündigungstelegramme und Installationstelegramme gesendet, wobei die Ankündigungstelegramme im oben beschriebenen Zeitabstand gesendet werden und die dazwischen gesendeten Installationstelegramme einen kürzeren Zeitabstand zum jeweiligen Ankündigungstelegramm, welches das jeweilige Installationstelegramm oder die jeweiligen Installationstelegramme ankündigt, aufweisen. Werden die Ankündigungstelegramme im oben angegebenen Zeitabstand zueinander gesendet und weisen die Installationstelegramme jeweils den gleichen Zeitabstand zum das jeweilige Installationstelegramm ankündigenden Ankündigungstelegramm auf, dann ist somit der Zeitabstand zwischen jeweils zwei aufeinander folgenden Installationstelegrammen gleich dem oben angegebenen Zeitabstand zwischen jeweils zwei aufeinander folgenden Ankündigungstelegrammen.

Alternativ können beispielsweise mehrere Ankündigungstelegramme nacheinander im oben angegebenen Zeitabstand gesendet werden und danach das angekündigte Installationstelegramm oder die angekündigten Installationstelegramme nacheinander gesendet werden, beispielsweise zwischen zwei Ankündigungstelegrammen.

Somit werden, wenn Ankündigungstelegramme gesendet werden, zweckmäßigerweise entweder im oben angegebenen Zeitabstand abwechselnd die Ankündigungstelegramme und die angekündigten Installationstelegramme gesendet, oder es werden im oben angegebenen Zeitabstand zweckmäßigerweise die Ankündigungstelegramme gesendet und das dadurch angekündigte Installationstelegramm oder die dadurch angekündigten Installationstelegramme werden unabhängig von diesem oben angegebenen Zeitabstand gesendet, nämlich wie durch das jeweilige Ankündigungstelegramm angekündigt, beispielsweise nach der vorgegebenen Zeit nach dem jeweiligen Ankündigungstelegramm und/oder zu dem vorgegebenen Zeitpunkt nach dem jeweiligen Ankündigungstelegramm das jeweilige Installationstelegramm.

Durch die Ankündigungstelegramme wird es ermöglicht, ein aus dem Stand der Technik bekanntes Sendeintervall für die Installationstelegramme beizubehalten, d. h. diese Installationstelegramme in großen Zeitabständen zu senden, welche größer sind als die oben angegebenen Zeitabstände von maximal 25 Sekunden, beispielsweise in einem Zeitabstand von 30 Sekunden bis 60 Sekunden, um beispielsweise Normvorgaben, beispielsweise einer DIN-EN-Norm, einzuhalten, und dennoch die Verbrauchswertempfangseinheit mehrfach abwechselnd einzuschalten und wieder auszuschalten. Durch die Ankündigungstelegramme wird dann sichergestellt, dass die Verbrauchswertempfangseinheit zumindest ein Ankündigungstelegramm empfängt und daraufhin gezielt für das durch dieses Ankündigungstelegramm angekündigte folgende Installationstelegramm oder für die durch dieses Ankündigungstelegramm angekündigten folgenden Installationstelegramme in Empfangsbereitschaft ist, d. h. entweder nach dem Empfang des Ankündigungstelegramms in Empfangsbereitschaft verbleibt oder derart in Empfangsbereitschaft geschaltet wird, dass sie sich zum Zeitpunkt des angekündigten Installationstelegramm in Empfangsbereitschaft befindet. Beispielsweise kann das Ankündigungstelegramm einen Zeitabstand enthalten, nach welchem das Installationstelegramm oder das jeweilige Installationstelegramm gesendet wird, d. h. einen Zeitabstand nach dem Senden und/oder Empfangen des Ankündigungstelegramms, oder es kann einen Zeitpunkt enthalten, zu welchem das Installationstelegramm oder das jeweilige Installationstelegramm gesendet wird, oder es ist der Verbrauchswertempfangseinheit ein Zeitabstand vom Empfang des Ankündigungstelegramms bis zum Senden des angekündigten Installationstelegramms oder des jeweiligen angekündigten Installationstelegramm fest vorgegeben. Dadurch muss keine Zeitangabe im Ankündigungstelegramm enthalten sein, sondern lediglich das Ankündigungstelegramm als solches von der Verbrauchswertempfangseinheit identifiziert werden, wodurch ab dem Empfang des Ankündigungstelegramms der für sie fest vorgegebene Zeitabstand beginnt, an dessen Ende sie in Empfangsbereitschaft sein muss.

Zweckmäßigerweise werden die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Ankündigungstelegramm und durch dessen Ankündigung das folgende mindestens eine Installationstelegramm empfangen wird.

Durch die erfindungsgemäße Lösung wird somit bei der Verbrauchswertempfangseinheit ein im Vergleich zum Stand der Technik wesentlich geringerer Energieverbrauch während der Installationsphase des Verbrauchswerterfassungsnetzwerks erreicht, da die Verbrauchswertempfangseinheit vorteilhafterweise die meiste Zeit schlafend gehalten werden kann, d. h. die Empfangsbereitschaft der Verbrauchswertempfangseinheit ist in der Installationsphase und somit während der Installationsbetriebsart der Verbrauchswertempfangseinheit die meiste Zeit ausgeschaltet. Insbesondere wenn die Verbrauchswertempfangseinheit batteriebetrieben ist, wird dadurch eine erheblich längere Lebensdauer der Verbrauchswertempfangseinheit erreicht, da eine derartige Installationsphase des Verbrauchswerterfassungsnetzwerks mit der Installation einer Mehrzahl von Verbrauchswertsendeeinheiten, beispielsweise einer Liegenschaft oder eines Gebäudes, in das Verbrauchswerterfassungsnetzwerk, d. h. insbesondere deren Anmeldung bei der Verbrauchswertempfangseinheit, einen Zeitaufwand von mehreren Stunden an einem Tag oder sogar an mehreren Tagen erfordern kann, so dass die Verbrauchswertempfangseinheit eine entsprechend lange Zeit in der Installationsbetriebsart verbleiben muss. Durch die mittels der erfindungsgemäßen Lösung ermöglichte mehrfache Unterbrechung der Empfangsbereitschaft der Verbrauchswertempfangseinheit wird daher eine entsprechend große Energieeinsparung erreicht.

Beispielsweise dauert ein solcher Aufbau des gesamten Verbrauchswerterfassungsnetzwerks mit einer Mehrzahl von Verbrauchswertsendeeinheiten acht Stunden pro Tag über drei Tage hinweg, so dass die Installationsbetriebsart der Verbrauchswertempfangseinheit 24 Stunden dauert. Die, beispielsweise arbeitszeitrechtlich bedingte, Unterbrechung nach beispielsweise acht Stunden pro Tag wird dabei nicht als Unterbrechung der Installationsphase und somit auch nicht als Unterbrechung der Empfangsbereitschaft der Verbrauchswertempfangseinheit gewertet, da diese Unterbrechung nicht durch das Einschalten und Ausschalten der Empfangsbereitschaft, sondern durch das zeitweise Abschalten der Installationsbetriebsart bedingt ist. Die aus dem Stand der Technik bekannte ununterbrochene Empfangsbereitschaft bezieht sich somit auf die Installationsdurchführungszeit, d. h. auf die Zeit, in welcher die Verbrauchswertempfangseinheit in der Installationsbetriebsart betrieben wird und somit auf die zusammengerechnete Installationsphase unter Ausklammerung von Unterbrechungen der Installation, beispielsweise über Nacht, in welcher die Verbrauchswertempfangseinheit oder zumindest deren Installationsbetriebsart abgeschaltet wird, insbesondere manuell durch einen Installateur. Solange diese Installationsbetriebsart nicht abgeschaltet wird, erfordert die aus dem Stand der Technik bekannte Vorgehensweise die ununterbrochene Empfangsbereitschaft der Verbrauchswertempfangseinheit, wohingegen durch die erfindungsgemäße Lösung eine mehrfach unterbrochene Empfangsbereitschaft, d. h. ein mehrfaches abwechselndes Einschalten und Ausschalten der Empfangsbereitschaft, ermöglicht wird.

In einem erfindungsgemäßen Verfahren zum Betrieb der Verbrauchswertsendeeinheit sendet die Verbrauchswertsendeeinheit in der Installationsbetriebsart, insbesondere während der Installation der Verbrauchswertsendeeinheit in ein Verbrauchswerterfassungsnetzwerk, vorteilhafterweise in einer Installationsphase des Verbrauchswerterfassungsnetzwerks, Ankündigungstelegramme in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Aus dieser Vorgehensweise resultieren die oben bereits geschilderten Vorteile.

Nach dem Senden des jeweiligen Ankündigungstelegramms oder mehrerer Ankündigungstelegramme sendet die Verbrauchswertsendeeinheit das dadurch, d. h. durch das jeweilige Ankündigungstelegramm oder durch die mehreren Ankündigungstelegramme, angekündigte jeweilige Installationstelegramm oder die mehreren durch das jeweilige Ankündigungstelegramm oder durch die mehreren Ankündigungstelegramme, angekündigten jeweiligen Installationstelegramme, vorteilhafterweise nach einer vorgegebenen Zeit nach diesem Ankündigungstelegramm oder nach dem jeweiligen Ankündigungstelegramm oder nach den mehreren Ankündigungstelegrammen, und/oder zu einem vorgegebenen Zeitpunkt.

Vorteilhafterweise sendet die Vebrauchswertsendeeinheit somit in der Installationsbetriebsart Ankündigungstelegramme in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, welche das nachfolgende Senden desselben mindestens einen Installationstelegramms oder mehrerer solcher Installationstelegramme ankündigen, und danach sendet sie das mindestens eine durch diese Ankündigungstelegramme angekündigte Installationstelegramm oder die mehreren durch die Ankündigungstelegramme angekündigten Installationstelegramme.

Eine erfindungsgemäße Verbrauchswertempfangseinheit, insbesondere Verbrauchswertweiterleitungseinheit und/oder Datensammler, ist dazu ausgebildet, in einer Installationsbetriebsart der Verbrauchswertempfangseinheit, insbesondere in einer Installationsphase des Verbrauchswerterfassungsnetzwerks, zweckmäßigerweise zur Installation einer oder mehrerer Verbrauchswertsendeeinheiten in das Verbrauchswerterfassungsnetzwerk, eine Empfangsbereitschaft mehrfach einzuschalten und auszuschalten. Dadurch ist die Verbrauchswertempfangseinheit vorteilhafterweise alternierend geöffnet oder schlafend, bevorzugt in größeren Zeitscheiben. Auf diese Weise wird während der Installationsbetriebsart der Verbrauchswertempfangseinheit, insbesondere während der Installationsphase des Verbrauchswerterfassungsnetzwerks, die oben bereits beschriebene Energieeinsparung bei der Verbrauchswertempfangseinheit erreicht, da während der Installationsphase des Verbrauchswerterfassungsnetzwerks keine dauerhafte Empfangsbereitschaft der Verbrauchswertempfangseinheit erforderlich ist. Des Weiteren wird dadurch dennoch ein schneller Empfang von einem oder mehreren Ankündigungstelegrammen und dadurch angekündigten einem oder mehreren Installationstelegrammen und somit eine schnelle Installation von Verbrauchswerterfassungseinheiten in das Verbrauchswerterfassungsnetzwerk sichergestellt.

Diese mehrfach unterbrochene Empfangsbereitschaft der Verbrauchswertempfangseinheit wird auch als "Toggeln" der Empfangsbereitschaft bezeichnet, d. h. die Empfangsbereitschaft der Verbrauchswertempfangseinheit wird mehrfach abwechselnd eingeschaltet und ausgeschaltet. Zweckmäßigerweise beträgt eine Ausschaltzeit, in welcher die Empfangsbereitschaft nicht eingeschaltet ist, ein Vielfaches einer Einschaltzeit, in welcher die Empfangsbereitschaft eingeschaltet ist. Die Einschaltzeit beträgt beispielsweise maximal 50% der Ausschaltzeit, bevorzugt maximal 40% oder maximal 30% oder maximal 20% oder maximal 10% oder maximal 7% oder maximal 6% oder maximal 5%.

Zweckmäßigerweise werden die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Ankündigungstelegramm und danach das durch das Ankündigungstelegramm angekündigte mindestens eine Installationstelegramm empfangen wird.

Vorzugsweise ist die Verbrauchswertempfangseinheit dazu ausgebildet, die Empfangsbereitschaft in einem Zeitabstand von jeweils mindestens 30 Sekunden und maximal drei Minuten oder maximal vier Minuten einzuschalten, insbesondere in einem Zeitabstand von jeweils 30 Sekunden oder erfindungsgemäß einer Minute oder 90 Sekunden oder zwei Minuten oder drei Minuten oder vier Minuten, um wenn nicht sofort ein Installationstelegramm empfangen wird, zumindest ein von der Verbrauchswertsendeeinheit gesendetes Ankündigungstelegramm zu empfangen, durch welches die Verbrauchswertempfangseinheit über ein folgendes Senden des Installationstelegramms informiert wird, woraufhin die Verbrauchswertempfangseinheit ihre Empfangsbereitschaft anpasst, um für das angekündigte von der Verbrauchswertsendeeinheit gesendete Installationstelegramm auf Empfangsbereitschaft zu sein. Der jeweilige Zeitabstand bezieht sich dabei zweckmäßigerweise auf den zeitlichen Abstand zwischen jeweils zwei aufeinander folgenden Einschaltzeitpunkten, d. h. die jeweiligen beiden aufeinander folgenden Einschaltzeitpunkte weisen einen Zeitabstand von mindestens einer Minute und maximal zwei Minuten auf. Dadurch wird, insbesondere in Verbindung mit der Einschaltzeit, d. h. mit dem Zeitraum, in welchem die Empfangsbereitschaft jeweils eingeschaltet bleibt, ein erheblicher zeitlicher Anteil an einer Gesamtzeit der Installationsphase erreicht, in welchem die Empfangsbereitschaft ausgeschaltet ist, wodurch eine entsprechend erhebliche Energieeinsparung erreicht wird. Des Weiteren wird dadurch dennoch ein schneller Empfang von Ankündigungstelegrammen und angekündigten Installationstelegrammen und somit eine schnelle Installation von Verbrauchswerterfassungseinheiten in das Verbrauchswerterfassungsnetzwerk sichergestellt.

Erfindungsgemäß ist die Verbrauchswertempfangseinheit dazu ausgebildet, die Empfangsbereitschaft nach dem jeweiligen Einschalten, d. h. ab dem jeweiligen Einschaltzeitpunkt, nach maximal 30 Sekunden auszuschalten, insbesondere nach maximal 25 Sekunden, bevorzugt nach maximal 20 Sekunden, besonders bevorzugt nach maximal 15 Sekunden, vorteilhafterweise nach maximal 10 Sekunden. Dadurch wird, insbesondere in Verbindung mit den Zeitabständen zwischen den Einschaltzeitpunkten, ein erheblicher zeitlicher Anteil an einer Gesamtzeit der Installationsphase erreicht, in welchem die Empfangsbereitschaft ausgeschaltet ist, wodurch eine entsprechend erhebliche Energieeinsparung erreicht wird. Des Weiteren wird dadurch dennoch ein schneller Empfang von Ankündigungstelegrammen und angekündigten Installationstelegrammen und somit eine schnelle Installation von Verbrauchswerterfassungseinheiten in das Verbrauchswerterfassungsnetzwerk sichergestellt. Wird ein Ankündigungstelegramm empfangen, so kann die beschriebene Vorgehensweise des Einschaltens und Ausschaltens der Empfangsbereitschaft beispielsweise unterbrochen werden, bis das durch das Ankündigungstelegramm angekündigte mindestens eine Installationstelegramm empfangen wurde, und danach fortgesetzt werden. Beispielsweise wird die Empfangsbereitschaft, nachdem das Ankündigungstelegramm empfangen wurde, nicht nach der oben angegebenen Zeit nach dem Einschalten wieder ausgeschaltet, sondern sie verbleibt in Empfangsbereitschaft, bis das mindestens eine Installationstelegramm empfangen wurde, oder die Verbrauchswertempfangseinheit wird, nachdem sie das Ankündigungstelegramm empfangen hat, nicht in dem oben angegebenen Zeitabstand wieder eingeschaltet, sondern vorteilhafterweise früher, nämlich derart, dass sie für das angekündigte mindestens eine Installationstelegramm in Empfangsbereitschaft ist. Der oben angegebene Rhythmus des Einschaltens und Ausschaltens der Empfangsbereitschaft kann durch diese Maßnahme, d. h. durch die Reaktion der Verbrauchswertempfangseinheit, unterbrochen werden, so dass er danach fortgesetzt wird, ohne dass die folgenden Intervalle zeitlich verschoben sind, da durch diese Maßnahme ein oder mehrere vollständige Intervalle ersetzt wurden, oder er kann durch diese Maßnahme, d. h. durch die Reaktion der Verbrauchswertempfangseinheit, zeitlich verschoben werden, indem diese Maßnahme in den oben beschriebenen Ablauf des Einschaltens und Ausschaltens der Empfangsbereitschaft eingefügt wird und somit die folgenden Intervalle zeitlich verschoben werden.

In einem erfindungsgemäßen Verfahren zum Betrieb der Verbrauchswertempfangseinheit wird in der Installationsbetriebsart der Verbrauchswertempfangseinheit, insbesondere während der Installationsphase des Verbrauchswerterfassungsnetzwerks, zweckmäßigerweise zur Installation einer oder mehrerer Verbrauchswertsendeeinheiten in das Verbrauchswerterfassungsnetzwerk, die Empfangsbereitschaft der Verbrauchswertempfangseinheit mehrfach eingeschaltet und ausgeschaltet. Daraus resultieren die oben bereits geschilderten Vorteile bezüglich der Energieeinsparungen bei der Verbrauchswertempfangseinheit und bezüglich des schnellen Empfangs von Ankündigungstelegrammen und angekündigten Installationstelegrammen und der daraus resultierenden schnellen Installation von Verbrauchswertsendeeinheiten in das Verbrauchswerterfassungsnetzwerk. Zweckmäßigerweise wird die Empfangsbereitschaft in einem Zeitabstand von jeweils mindestens 30 Sekunden und maximal drei Minuten oder maximal vier Minuten eingeschaltet, insbesondere in einem Zeitabstand von jeweils 30 Sekunden oder erfindungsgemäß einer Minute oder 90 Sekunden oder zwei Minuten oder drei Minuten oder vier Minuten, um wenn nicht sofort ein Installationstelegramm empfangen wird, zumindest ein von der Verbrauchswertsendeeinheit gesendetes Ankündigungstelegramm zu empfangen, durch welches die Verbrauchswertempfangseinheit über ein folgendes Senden des Installationstelegramms informiert wird, woraufhin die Verbrauchswertempfangseinheit ihre Empfangsbereitschaft anpasst, um für das angekündigte von der Verbrauchswertsendeeinheit gesendete Installationstelegramm auf Empfangsbereitschaft zu sein. Daraus resultieren die oben bereits geschilderten Vorteile bezüglich der Energieeinsparungen bei der Verbrauchswertempfangseinheit und bezüglich des schnellen Empfangs von Ankündigungstelegrammen und angekündigten Installationstelegrammen und der daraus resultierenden schnellen Installation von Verbrauchswertsendeeinheiten in das Verbrauchswerterfassungsnetzwerk.

Erfindungsgemäß wird die Empfangsbereitschaft maximal 30 Sekunden nach dem jeweiligen Einschalten ausgeschaltet, insbesondere maximal 25 Sekunden, bevorzugt maximal 20 Sekunden, besonders bevorzugt maximal 15 Sekunden, vorteilhafterweise nach maximal 10 Sekunden nach dem jeweiligen Einschalten. Daraus resultieren die oben bereits geschilderten Vorteile bezüglich der Energieeinsparungen bei der Verbrauchswertempfangseinheit und bezüglich des schnellen Empfangs von Ankündigungstelegrammen und angekündigten Installationstelegrammen und der daraus resultierenden schnellen Installation von Verbrauchswertsendeeinheiten in das Verbrauchswerterfassungsnetzwerk. Wird ein Ankündigungstelegramm empfangen, wird zweckmäßigerweise auf die oben beschriebene Weise vorgegangen, d. h. dann kann die beschriebene Vorgehensweise des Einschaltens und Ausschaltens der Empfangsbereitschaft beispielsweise unterbrochen werden, bis das durch das Ankündigungstelegramm angekündigte mindestens eine Installationstelegramm empfangen wurde, und danach fortgesetzt werden. Beispielsweise wird die Empfangsbereitschaft, nachdem das Ankündigungstelegramm empfangen wurde, nicht nach der oben angegebenen Zeit nach dem Einschalten wieder ausgeschaltet, sondern sie verbleibt in Empfangsbereitschaft, bis das mindestens eine Installationstelegramm empfangen wurde, oder die Verbrauchswertempfangseinheit wird, nachdem sie das Ankündigungstelegramm empfangen hat, nicht in dem oben angegebenen Zeitabstand wieder eingeschaltet, sondern vorteilhafterweise früher, nämlich derart, dass sie für das angekündigte mindestens eine Installationstelegramm in Empfangsbereitschaft ist. Der oben angegebene Rhythmus des Einschaltens und Ausschaltens der Empfangsbereitschaft kann durch diese Maßnahme, d. h. durch die Reaktion der Verbrauchswertempfangseinheit, unterbrochen werden, so dass er danach fortgesetzt wird, ohne dass die folgenden Intervalle zeitlich verschoben sind, da durch diese Maßnahme ein oder mehrere vollständige Intervalle ersetzt wurden, oder er kann durch diese Maßnahme, d. h. durch die Reaktion der Verbrauchswertempfangseinheit, zeitlich verschoben werden, indem diese Maßnahme in den oben beschriebenen Ablauf des Einschaltens und Ausschaltens der Empfangsbereitschaft eingefügt wird und somit die folgenden Intervalle zeitlich verschoben werden.

Eine erfindungsgemäße Sender-Empfänger-Anordnung umfasst zumindest eine oben beschriebene Verbrauchswertempfangseinheit und zumindest eine oben beschriebene Verbrauchswertsendeeinheit, vorteilhafterweise eine Mehrzahl solcher Verbrauchswertsendeeinheiten. Daraus resultieren die oben zur Verbrauchswertsendeeinheit und Verbrauchswertempfangseinheit geschilderten Vorteile. Während der Installationsphase bildet die Sender-Empfänger-Anordnung das sich ausbildende Verbrauchswerterfassungsnetzwerk oder zumindest einen Teil des sich ausbildenden Verbrauchswerterfassungsnetzwerks. Nach der Installationsphase bildet die Sender-Empfänger-Anordnung das Verbrauchswerterfassungsnetzwerk oder zumindest einen Teil des Verbrauchswerterfassungsnetzwerks.

In einem erfindungsgemäßen Verfahren zum Betrieb der Sender-Empfänger-Anordnung sendet die Verbrauchswertsendeeinheit in der Installationsbetriebsart, insbesondere während der Installation der Verbrauchswertsendeeinheit in das Verbrauchswerterfassungsnetzwerk, vorteilhafterweise in der Installationsphase des Verbrauchswerterfassungsnetzwerks, Ankündigungstelegramme in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, und nach dem Senden eines Ankündigungstelegramms oder mehrerer Ankündigungstelegramme mindestens ein dadurch, d. h. durch das eine Ankündigungstelegramms oder die mehreren Ankündigungstelegramme, angekündigtes Installationstelegramm oder mehrere durch das eine Ankündigungstelegramms oder die mehreren Ankündigungstelegramme angekündigte Installationstelegramme. Daraus resultieren die oben beschriebenen Vorteile.

Sendet die Verbrauchswertsendeeinheit somit auf die oben beschriebene Weise Ankündigungstelegramme, so sendet sie beispielsweise nach dem Senden des jeweiligen Ankündigungstelegramms das dadurch angekündigte jeweilige mindestens eine Installationstelegramm, vorteilhafterweise nach einer vorgegebenen Zeit nach diesem Ankündigungstelegramm und/oder zu einem vorgegebenen Zeitpunkt, wie der Verbrauchswertempfangseinheit zweckmäßigerweise durch das Ankündigungstelegramm mitgeteilt. Alternativ ist vorgesehen, dass, wenn die Verbrauchswertsendeeinheit somit auf die oben beschriebene Weise Ankündigungstelegramme sendet, sie beispielsweise nach mehreren Ankündigungstelegrammen das durch diese Ankündigungstelegramme angekündigte mindestens eine Installationstelegramm oder die mehreren durch diese Ankündigungstelegramme angekündigten Installationstelegramme sendet, vorteilhafterweise nach der vorgegebenen Zeit nach dem jeweiligen Ankündigungstelegramm und/oder zu dem vorgegebenen Zeitpunkt, wie der Verbrauchswertempfangseinheit zweckmäßigerweise durch das jeweilige Ankündigungstelegramm mitgeteilt. Die Verbrauchswertempfangseinheit muss nur eines dieser Ankündigungstelegramme empfangen, um mitgeteilt zu bekommen, wann das dadurch angekündigte Installationstelegramm gesendet wird oder die dadurch angekündigten Installationstelegramme gesendet werden.

Alternativ werden die Ankündigungstelegramme im oben beschriebenen Zeitabstand gesendet und das durch das jeweilige Ankündigungstelegramm angekündigte Installationstelegramm oder die durch das jeweilige Ankündigungstelegramm angekündigten Installationstelegramme wird/werden zwischen dem Ankündigungstelegramm, welches das jeweilige Installationstelegramm oder die jeweiligen Installationstelegramme ankündigt, und dem jeweils nachfolgenden Ankündigungstelegramm gesendet und somit in einem von dem oben angegebenen Zeitabstand abweichenden Zeitabstand zum Ankündigungstelegramm, durch welches das jeweilige Installationstelegramm angekündigt wird. Somit werden auch bei dieser Variante abwechselnd Ankündigungstelegramme und Installationstelegramme gesendet, wobei die Ankündigungstelegramme im oben beschriebenen Zeitabstand gesendet werden und die dazwischen gesendeten Installationstelegramme einen kürzeren Zeitabstand zum jeweiligen Ankündigungstelegramm, welches das jeweilige Installationstelegramm ankündigt, aufweisen. Werden die Ankündigungstelegramme im oben angegebenen Zeitabstand zueinander gesendet und weisen die Installationstelegramme jeweils den gleichen Zeitabstand zum das jeweilige Installationstelegramm ankündigenden Ankündigungstelegramm auf, dann ist somit der Zeitabstand zwischen jeweils zwei aufeinander folgenden Installationstelegrammen gleich dem oben angegebenen Zeitabstand zwischen jeweils zwei aufeinander folgenden Ankündigungstelegrammen.

Alternativ können beispielsweise mehrere Ankündigungstelegramme nacheinander im oben angegebenen Zeitabstand gesendet werden und danach das angekündigte Installationstelegramm oder die angekündigten Installationstelegramme nacheinander gesendet werden, beispielsweise zwischen zwei Ankündigungstelegrammen.

Somit werden zweckmäßigerweise entweder im oben angegebenen Zeitabstand abwechselnd die Ankündigungstelegramme und die angekündigten Installationstelegramme gesendet, oder es werden im oben angegebenen Zeitabstand zweckmäßigerweise die Ankündigungstelegramme gesendet und das dadurch angekündigte Installationstelegramm oder die dadurch angekündigten Installationstelegramme werden unabhängig von diesem oben angegebenen Zeitabstand gesendet, nämlich wie durch das jeweilige Ankündigungstelegramm angekündigt, beispielsweise nach der vorgegebenen Zeit nach dem jeweiligen Ankündigungstelegramm und/oder zu dem vorgegebenen Zeitpunkt nach dem jeweiligen Ankündigungstelegramm das jeweilige Installationstelegramm.

Vorteilhafterweise sendet die Verbrauchswertsendeeinheit in der Installationsbetriebsart Ankündigungstelegramme in einem Zeitabstand von jeweils maximal 25 Sekunden sendet, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, welche das nachfolgende Senden desselben mindestens einen Installationstelegramms oder mehrerer solcher Installationstelegramme ankündigen, und danach sendet sie das mindestens eine durch diese Ankündigungstelegramme angekündigte Installationstelegramm oder die mehreren durch die Ankündigungstelegramme angekündigten Installationstelegramme.

Vorteilhafterweise wird in der Installationsbetriebsart der Verbrauchswertempfangseinheit eine Empfangsbereitschaft der Verbrauchswertempfangseinheit mehrfach eingeschaltet und ausgeschaltet. Daraus resultieren die oben bereits geschilderten Vorteile.

Zweckmäßigerweise wird die Empfangsbereitschaft in einem Zeitabstand von jeweils mindestens 30 Sekunden und maximal drei Minuten oder vier Minuten eingeschaltet, insbesondere in einem Zeitabstand von jeweils 30 Sekunden oder einer Minute oder 90 Sekunden oder zwei Minuten oder drei Minuten oder vier Minuten. Daraus resultieren die oben bereits geschilderten Vorteile.

Zweckmäßigerweise wird die Empfangsbereitschaft nach dem jeweiligen Einschalten nach maximal 30 Sekunden ausgeschaltet, insbesondere nach maximal 25 Sekunden, bevorzugt nach maximal 20 Sekunden, besonders bevorzugt nach maximal 15 Sekunden, vorteilhafterweise nach maximal 10 Sekunden. Daraus resultieren die oben bereits geschilderten Vorteile.

Wird ein Ankündigungstelegramm empfangen, wird zweckmäßigerweise auf die oben beschriebene Weise vorgegangen, d. h. dann kann die beschriebene Vorgehensweise des Einschaltens und Ausschaltens der Empfangsbereitschaft beispielsweise unterbrochen werden, bis das durch das Ankündigungstelegramm angekündigte mindestens eine Installationstelegramm empfangen wurde, und danach fortgesetzt werden. Beispielsweise wird die Empfangsbereitschaft, nachdem das Ankündigungstelegramm empfangen wurde, nicht nach der oben angegebenen Zeit nach dem Einschalten wieder ausgeschaltet, sondern sie verbleibt in Empfangsbereitschaft, bis das mindestens eine Installationstelegramm empfangen wurde, oder die Verbrauchswertempfangseinheit wird, nachdem sie das Ankündigungstelegramm empfangen hat, nicht in dem oben angegebenen Zeitabstand wieder eingeschaltet, sondern vorteilhafterweise früher, nämlich derart, dass sie für das mindestens eine angekündigte Installationstelegramm in Empfangsbereitschaft ist. Der oben angegebene Rhythmus des Einschaltens und Ausschaltens der Empfangsbereitschaft kann durch diese Maßnahme, d. h. durch die Reaktion der Verbrauchswertempfangseinheit, unterbrochen werden, so dass er danach fortgesetzt wird, ohne dass die folgenden Intervalle zeitlich verschoben sind, da durch diese Maßnahme ein oder mehrere vollständige Intervalle ersetzt wurden, oder er kann durch diese Maßnahme, d. h. durch die Reaktion der Verbrauchswertempfangseinheit, zeitlich verschoben werden, indem diese Maßnahme in den oben beschriebenen Ablauf des Einschaltens und Ausschaltens der Empfangsbereitschaft eingefügt wird und somit die folgenden Intervalle zeitlich verschoben werden.

Die Kommunikationsverbindung, welche zwischen der jeweiligen Verbrauchswertsendeeinheit und der Verbrauchswertempfangseinheit während der Installationsphase zum Aufbau des Verbrauchswerterfassungsnetzwerks initial aufgebaut wird und danach im Normalbetrieb des Verbrauchswerterfassungsnetzwerks insbesondere zum Senden von Verbrauchsdaten von der jeweiligen Verbrauchswertsendeeinheit an die Verbrauchswertempfangseinheit genutzt wird, ist insbesondere eine drahtlose Kommunikationsverbindung, beispielsweise eine Funkverbindung. Diese Kommunikationsverbindung kann eine unidirektionale oder bidirektionale Kommunikationsverbindung sein. Die Kommunikationsverbindung ist insbesondere eine Datenkommunikationsverbindung, welche insbesondere der Übertragung von Verbrauchswerten von der jeweiligen Verbrauchswertsendeeinheit zur Verbrauchswertempfangseinheit dient. Besonders vorteilhaft ist die beschriebene Vorgehensweise bei einer unidirektionalen Kommunikationsverbindung.

Die jeweilige Verbrauchswertsendeeinheit ist beispielsweise als eine Verbrauchswerterfassungseinheit und/oder Verbrauchswertweiterleitungseinheit ausgebildet. Eine Verbrauchswerterfassungseinheit ist beispielsweise ein Heizkostenverteiler, Wärmezähler, Wasserzähler, Gaszähler oder Stromzähler. Eine Verbrauchswertweiterleitungseinheit ist beispielsweise ein so genannter Repeater, d. h. ein Netzwerkknoten, welcher Daten, insbesondere Verbrauchsdaten, zum Beispiel Verbrauchswerte und/oder andere Daten, von einer oder mehreren Vebrauchswerterfassungseinheiten und/oder einem oder mehreren anderen Repeatern empfängt und weiterleitet, ohne oder mit Zwischenspeicherung. Die Verbrauchswertweiterleitungseinheit kann hierbei beispielsweise auch selbst als eine Verbrauchswerterfassungseinheit ausgebildet sein. Alternativ zur Ausbildung der jeweiligen Verbrauchswertsendeeinheit als Verbrauchswerterfassungseinheit und/oder Verbrauchswertweiterleitungseinheit kann die jeweilige Verbrauchswerterfassungseinheit und/oder Verbrauchswertweiterleitungseinheit eine solche Verbrauchswertsendeeinheit umfassen, beispielsweise als separates Modul oder als integrierte Einheit.

Die jeweilige Verbrauchswertempfangseinheit ist beispielsweise als eine Verbrauchswertweiterleitungseinheit und/oder als ein Datensammler ausgebildet, d. h. eine Verbrauchswertweiterleitungseinheit kann sowohl Verbrauchswertsendeeinheit als auch Verbrauchswertempfangseinheit sein, da sie als Repeater arbeitet und Daten, insbesondere Verbrauchsdaten, von einer oder mehreren anderen Einheiten des Verbrauchswertefassungsnetzwerks empfängt, eventuell zwischenspeichert, und an eine oder mehrere andere Einheiten des Verbrauchswerterfassungsnetzwerks weiterleitet. Ein Datensammler bildet zweckmäßigerweise eine höchste Netzwerkebene. Er sammelt alle Verbrauchsdaten des Verbrauchswerterfassungsnetzwerks ein, beispielsweise Verbrauchswerte und andere Daten. Beispielsweise ist der Datensammler als ein mobiler oder stationärer Datensammler ausgebildet, wobei ein mobiler Datensammler nur zeitweise mit dem Netzwerk verbunden ist. Es können auch mehrere Datensammler pro Netzwerk vorgesehen sein, wobei diese dann jeweils alle oder nur für sie vorgesehene Verbrauchdaten des Netzwerks sammeln.

Die beschriebene Lösung ermöglicht es, dass die Verbrauchswertsendeeinheit in der Installationsbetriebsart in wesentlich kürzeren Zeitabständen als aus dem Stand der Technik bekannt Ankündigungstelegramme sendet. Die Häufigkeit des Sendens der Ankündigungstelegramme, d. h. die Sendehäufigkeit und damit der Zeitabstand zwischen den Ankündigungstelegrammen, wird beispielsweise lediglich durch die Bestimmung und Erhöhung der Kollisionswahrscheinlichkeit begrenzt.

Wie oben bereits erwähnt, werden bzw. sind zweckmäßigerweise die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Ankündigungstelegramm und mindestens ein dadurch angekündigtes nachfolgendes Installationstelegramm der jeweiligen Verbrauchswertsendeeinheit von der Verbrauchswertempfangseinheit empfangen wird.

Beispielsweise wird die Empfangsbereitschaft der Verbrauchswertempfangseinheit nach dem jeweiligen Einschalten, d. h. ab dem jeweiligen Einschaltzeitpunkt, nach einem Zeitraum abgeschaltet, welcher einer Sendeperiode P oder einer Mehrzahl von Sendeperioden P, vorzugsweise zuzüglich eines Zeitzuschlags Z von beispielsweise 0,1 s, entspricht, beispielsweise 10,1 s. Die Sendeperiode P oder Periodenzeit ist dabei der Zeitabstand zwischen aufeinanderfolgend gesendeten Ankündigungstelegrammen:
Zeitraum der Empfangsbereitschaft = n * P + Z, wobei 1<=n, wobei zweckmäßigerweise n<=3, wobei der Z im Bereich von 0,1 s liegt, beispielsweise 0 s bis 2 s.

Die Verbrauchswertsendeeinheit sendet zweckmäßigerweise Ankündigungstelegramme in einem vorgegebenen Ankündigungstelegrammsendezeitraum T mit einer vorgegebenen Sendeperiode P, d. h. mit einem vorgegebenen Zeitabstand zwischen aufeinanderfolgend gesendeten Ankündigungstelegrammen. Die Verbrauchswertempfangseinheit muss daher mindestens einmal innerhalb des Ankündigungstelegrammsendezeitraums T in Empfangsbereitschaft sein, bevorzugt mehrfach innerhalb dieses Ankündigungstelegrammsendezeitraums T, um kürzere Reaktionszeiten zu erzielen. Zweckmäßigerweise sollte die Verbrauchswertempfangseinheit mindestens eine vorgegebene Anzahl s von Ankündigungstelegrammen und/oder Installationstelegrammen von der jeweiligen Verbrauchswertsendeeinheit empfangen, um Verluste durch Kollisionen mit anderen Funkaussendungen oder Störungen auszugleichen und dabei mit hoher Wahrscheinlichkeit mindestens ein Ankündigungstelegramm und daraufhin das durch das Ankündigungstelegramm angekündigte mindestens eine Installationstelegramm fehlerfrei zu empfangen, und somit über einen Zeitraum von mehreren Sendeperioden (n*P) in Empfangsbereitschaft sein, wie oben bereits beschrieben.

Um dies zu ermöglichen, wird das Verhältnis von Ankündigungstelegrammsendezeitraum zu Sendeperiode (T/P), d. h. das Verhältnis von Ankündigungstelegrammsendezeitraum zu Zeitabstand zwischen zwei Ankündigungstelegrammen, größer gewählt, als aus dem Stand der Technik bekannt, insbesondere größer als 10, insbesondere viel größer als 10, und größer als die Anzahl s mindestens von der Verbrauchswertempfangseinheit zu empfangender Ankündigungstelegramme der jeweiligen Verbrauchswertsendeeinheit.

Damit können Einsparungen in der Empfangszeit bis zu T/(P*s) erreicht werden.

Zweckmäßigerweise wird daher das Verhältnis von Ankündigungstelegrammsendezeitraum zu Sendeperiode (T/P), d. h. das Verhältnis von Ankündigungstelegrammsendezeitraum zu Zeitabstand zwischen zwei Ankündigungstelegrammen, größer als aus dem Stand der Technik bekannt, insbesondere aus entsprechenden Normen bekannt, festgelegt. Insbesondere wird hierzu die Sendeperiode, d. h. der Zeitabstand zwischen zwei Ankündigungstelegrammen, reduziert, d. h. die Ankündigungstelegramme werden in kürzeren Zeitabständen gesendet, insbesondere in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Zusätzlich kann beispielsweise auch der Ankündigungstelegrammsendezeitraum T vergrößert werden.

Der Ankündigungstelegrammsendezeitraum, innerhalb welchem die jeweilige Verbrauchswertsendeeinheit die Ankündigungstelegramme in dem oben beschriebenen Zeitabstand sendet, ist zweckmäßigerweise vorgegeben. Dessen Länge bleibt zweckmäßigerweise gleich, auch wenn der Zeitabstand zwischen dem Senden der Ankündigungstelegramme sich verändert, d. h. insbesondere gegenüber dem aus dem Stand der Technik bekannten Zeitabstand reduziert ist. Wird der Zeitabstand verringert und somit die Sendehäufigkeit erhöht, werden somit in diesem Ankündigungstelegrammsendezeitraum eine größere Anzahl Ankündigungstelegramme ausgesendet.

Der Ankündigungstelegrammsendezeitraum beträgt beispielsweise drei Minuten oder ist kürzer oder länger. Der Ankündigungstelegrammsendezeitraum ist zweckmäßigerweise derart vorgegeben, dass die Verbrauchswertempfangseinheit mindestens ein Ankündigungstelegramm, vorteilhafterweise mehrere Ankündigungstelegramme, der jeweiligen Verbrauchswertsendeeinheit empfangen kann. Der Ankündigungstelegrammsendezeitraum kann somit beispielsweise in Abhängigkeit von dem Zeitabstand, in welchem die Ankündigungstelegramme von der jeweiligen Verbrauchswertsendeeinheit gesendet werden, und von dem Zeitabstand, in welchem die Empfangsbereitschaft der Verbrauchswertempfangseinheit eingeschaltet wird sowie von der Zeit, nach welcher die Empfangsbereitschaft wieder ausgeschaltet wird, vorgegeben werden.

Werden von der jeweiligen Verbrauchswertsendeeinheit Ankündigungstelegramme gesendet, welche jeweils das Senden eines folgenden Installationstelegramms ankündigen, so werden zweckmäßigerweise die Ankündigungstelegramme in dem oben angegebenen Zeitabstand von beispielsweise jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden gesendet. Die Installationstelegramme können dann in einem anderen Zeitabstand gesendet werden, beispielsweise in einem längeren Zeitabstand von zum Beispiel 30 Sekunden bis 60 Sekunden, um beispielsweise Normvorgaben, beispielsweise einer DIN-EN-Norm, einzuhalten, oder in unregelmäßigen Zeitabständen, denn durch das Ankündigungstelegramm wird die rechtzeitige Empfangsbereitschaft der Verbrauchswertempfangseinheit für den Empfang des durch das Ankündigungstelegramm angekündigten Installationstelegramms sichergestellt, indem durch das Ankündigungstelegramm beispielsweise explizit ein Zeitpunkt, an welchem das angekündigte Installationstelegramm gesendet wird, oder ein Zeitabstand beispielsweise ab dem Senden und/oder Empfangen des Ankündigungstelegramms bis zum Senden des angekündigten Installationstelegramms der Verbrauchswertempfangseinheit mitgeteilt wird oder indem in der Verbrauchswertempfangseinheit ein Zeitabstand ab dem Empfang eines Ankündigungstelegramms fest vorgegeben ist. D. h. in diesem Fall wird der Verbrauchswertempfangseinheit durch das Ankündigungstelegramm der Sendezeitpunkt und/oder Empfangszeitpunkt des angekündigten Installationstelegramms implizit mitgeteilt, da nach dem Empfang des Ankündigungstelegramms der in der Verbrauchswertempfangseinheit vorgegebene Zeitabstand beginnt, an dessen Ende das Installationstelegramm von der Verbrauchswertsendeeinheit gesendet wird, so dass die Verbrauchswertempfangseinheit dann in Empfangsbereitschaft sein muss. Die Verbrauchswertempfangseinheit kann dadurch bis zum Empfang des angekündigten Installationstelegramms in Empfangsbereitschaft bleiben, d. h. diese nicht aussschalten, oder rechtzeitig die Empfangsbereitschaft wieder einschalten, um das angekündigte Installationstelegramm zu empfangen.

Das jeweilige Ankündigungstelegramm umfasst als Information beispielsweise die vorgegebene Zeit nach dem Ankündigungstelegramm, ab welcher das durch das Ankündigungstelegramm angekündigte Installationstelegramm gesendet wird, oder die vorgegebenen Zeiten nach dem Ankündigungstelegramm, ab welchen die durch das Ankündigungstelegramm angekündigten Installationstelegramme jeweils gesendet werden. Alternativ oder zusätzlich umfasst das jeweilige Ankündigungstelegramm als Information beispielsweise den vorgegebenen Zeitpunkt, an welchem das durch das Ankündigungstelegramm angekündigte Installationstelegramm gesendet wird, oder die vorgegebenen Zeitpunkte an welchen die durch das Ankündigungstelegramm angekündigten Installationstelegramme jeweils gesendet werden. Alternativ kann das Ankündigungstelegramm beispielsweise nur eine Information umfassen, die es als Ankündigungstelegramm identifiziert, insbesondere dann, wenn der Verbrauchswertempfangseinheit ein Zeitabstand vom Empfang des Ankündigungstelegramms bis zum Senden des angekündigten Installationstelegramms oder des jeweiligen angekündigten Installationstelegramm fest vorgegeben ist. Werden in diesem Fall mehrere Ankündigungstelegramme gesendet, so wird zweckmäßigerweise billigend in Kauf genommen, dass nach diesem fest vorgegebenen Zeitabstand von beispielsweise 10 Sekunden nach dem ersten Ankündigungstelegramm nicht das Installationstelegramm, sondern ein weiteres Ankündigungstelegramm empfangen wird, so dass die Verbrauchswertempfangseinheit nach dem weiteren fest vorgegebenen Zeitabstand nochmals die Empfangsbereitschaft einschalten muss. Dies, insbesondere das Empfangen weiterer Ankündigungstelegramme anstatt des Installationstelegramms, kann sich bei mehr als zwei Ankündigungstelegrammen entsprechend auch mehrmals wiederholen, bis dann das Installationstelegramm von der Verbrauchswertsendeeinheit gesendet und entsprechend von der Verbrauchswertempfangseinheit empfangen wird. Die Einsparung gegenüber der aus dem Stand der Technik bekannten Verbrauchswertempfangseinheit mit ununterbrochener Empfangsbereitschaft ist trotz dieses Zusatzempfangs mehrerer Ankündigungstelegramme weiterhin signifikant.

Zusätzlich kann das jeweilige Ankündigungstelegramm beispielsweise eine Identifikationsinformation zur Identifikation der Verbrauchswertsendeeinheit umfassen, durch welche es gesendet wird, und/oder beispielsweise weitere Zusatzinformationen. Diese Zusatzinformationen beinhalten jedoch zweckmäßigerweise nicht Informationen, welche im Installationstelegramm enthalten sind, und/oder Informationen, welche zur Installation der Vebrauchswertsendeeinheit in das Verbrauchswerterfassungsnetzwerk erforderlich sind.

Vorteilhafterweise ist das Ankündigungstelegramm kleiner und/oder kürzer als das Installationstelegramm.

Das jeweilige Installationstelegramm umfasst als Information beispielsweise Managementdaten und/oder die aktuelle Uhrzeit und/oder Daten, insbesondere Detailinformationen, der Verbrauchswertsendeeinheit, durch welche es gesendet wird. Beispielsweise umfasst das jeweilige Installationstelegramm mindestens:
- eine Information, beispielsweise mindestens ein Bit, die bzw., das es als Installationstelegramm kenntlich macht,
- Daten, insbesondere Detailinformationen, der Verbrauchswertsendeeinheit, durch welche es gesendet wird,
- weitere Informationen, die zur Integration der Verbrauchswertsendeeinheit notwendig sind.

Insbesondere umfasst zweckmäßigerweise weder das jeweilige Ankündigungstelegramm noch das jeweilige Installationstelegramm Verbrauchsdaten. Solche Verbrauchsdaten werden von der Verbrauchswertsendeeinheit insbesondere erst nach Abschluss der Installationsphase, d. h. erst im Normalbetrieb, erfasst und/oder gesendet.

Alternativ kann beispielsweise auch vorgesehen sein, dass zumindest das jeweilige Ankündigungstelegramm keine Verbrauchsdaten umfasst, während das jeweilige Installationstelegramm bereits Verbrauchsdaten umfassen kann.

Das vom Ankündigungstelegramm angekündigte mindestens eine Installationstelegramm wird insbesondere zeitnah nach dem Ankündigungstelegramm gesendet, beispielsweise innerhalb von maximal 30 Sekunden oder maximal 60 Sekunden nach dem Ankündigungstelegramm. Dies hat den Vorteil, dass das beispielsweise durch eine Norm, insbesondere eine DIN-EN-Norm, vorgegebene Sendeintervall für die Installationstelegramme eingehalten werden kann und die Ankündigungstelegramme zwischen den Installationstelegrammen gesendet werden können. Alternativ können durch das Ankündigungstelegramm beispielsweise auch andere Zeiträume bis zum Senden des angekündigten jeweiligen Installationstelegramms und/oder andere Zeitpunkte des Sendens des angekündigten jeweiligen Installationstelegramms vorgegeben werden.

In einer Ausführungsform ist die Verbrauchswertsendeeinheit, insbesondere Verbrauchswerterfassungseinheit und/oder Verbrauchswertweiterleitungseinheit, dazu ausgebildet, in einer Installationsbetriebsart, insbesondere während der Installation der Verbrauchswertsendeeinheit in ein Verbrauchswerterfassungsnetzwerk, vorteilhafterweise in einer Installationsphase des Verbrauchswerterfassungsnetzwerks, Installationstelegramme und/oder Ankündigungstelegramme in einem Zeitabstand von jeweils maximal 25 Sekunden zu senden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Zweckmäßigerweise beginnt der jeweilige Zeitabstand mit einem Beginn des Sendens eines jeweiligen Installationstelegramms und/oder Ankündigungstelegramms und endet mit einem Beginn des Sendens des jeweiligen nächsten Installationstelegramms und/oder Ankündigungstelegramms, d. h. nach dem jeweiligen Zeitabstand ab dem Beginn des Sendens eines jeweiligen Installationstelegramms und/oder Ankündigungstelegramms beginnt das Senden des jeweiligen nächsten Installationstelegramms und/oder Ankündigungstelegramms.

Die Verbrauchswertsendeeinheit ist besonders vorteilhaft während einer Installationsphase eines Verbrauchswerterfassungsnetzwerks, d. h. insbesondere während der Installation der Verbrauchswertsendeeinheit in das Verbrauchswerterfassungsnetzwerk, welches zumindest eine Verbrauchswertempfangseinheit umfasst. Während einer solchen Installationsphase des Verbrauchswerterfassungsnetzwerks, d. h. zu dessen Aufbau, sendet die jeweilige Verbrauchswertsendeeinheit in der Installationsbetriebsart auf die beschriebene Weise, d. h. in im Vergleich zum Stand der Technik wesentlich kürzeren Zeitabständen, die Installationstelegramme und/oder Ankündigungstelegramme, um sich bei der Verbrauchswertempfangseinheit als Mitglied des Verbrauchswerterfassungsnetzwerks anzumelden, wodurch die Verbrauchswertsendeeinheit in das Verbrauchswerterfassungsnetzwerk installiert wird. Während dieser Installationsphase erfolgt insbesondere ein initialer Aufbau einer Kommunikationsverbindung der jeweiligen Verbrauchswertsendeeinheit mit der Verbrauchswertempfangseinheit und somit eine Einbindung in das Verbrauchswerterfassungsnetzwerk mit der Verbrauchswertempfangseinheit. Das Senden der Installationstelegramme ermöglicht dabei die Installation der jeweiligen Verbrauchswertsendeeinheit in das Verbrauchswerterfassungsnetzwerk.

Durch das Senden der Installationstelegramme in den beschriebenen kurzen Zeitabständen muss die Verbrauchswertempfangseinheit, im Unterschied zum Stand der Technik, nicht während der gesamten Installationsphase ununterbrochen in Empfangsbereitschaft sein, um die Installationstelegramme zu empfangen, sondern es wird ermöglicht, die Empfangsbereitschaft der Verbrauchswertempfangseinheit während der Installationsphase des Verbrauchswerterfassungsnetzwerks und somit in einer Installationsbetriebsart der Verbrauchswertempfangseinheit mehrfach abwechselnd einzuschalten und wieder auszuschalten. D. h. die Verbrauchswertempfangseinheit ist dann, bevorzugt in größeren Zeitscheiben, alternierend geöffnet oder schlafend.

Zweckmäßigerweise werden die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Installationstelegramm der jeweiligen Verbrauchswertsendeeinheit von der Verbrauchswertempfangseinheit empfangen wird oder mindestens ein Ankündigungstelegramm und durch dessen Ankündigung das folgende Installationstelegramm empfangen wird.

In einer Ausführungsform des Verfahrens zum Betrieb der Verbrauchswertsendeeinheit sendet die Verbrauchswertsendeeinheit in der Installationsbetriebsart, insbesondere während der Installation der Verbrauchswertsendeeinheit in ein Verbrauchswerterfassungsnetzwerk, vorteilhafterweise in einer Installationsphase des Verbrauchswerterfassungsnetzwerks, Installationstelegramme und/oder Ankündigungstelegramme in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Aus dieser Vorgehensweise resultieren die oben bereits geschilderten Vorteile.

Sendet die Verbrauchswertsendeeinheit Ankündigungstelegramme, so sendet sie zweckmäßigerweise nach dem Senden des jeweiligen Ankündigungstelegramms das dadurch angekündigte jeweilige Installationstelegramm, vorteilhafterweise nach einer vorgegebenen Zeit nach diesem Ankündigungstelegramm und/oder zu einem vorgegebenen Zeitpunkt.

In einer Ausführungsform ist die Verbrauchswertempfangseinheit, insbesondere Verbrauchswertweiterleitungseinheit und/oder Datensammler, dazu ausgebildet, in einer Installationsbetriebsart der Verbrauchswertempfangseinheit, insbesondere in einer Installationsphase des Verbrauchswerterfassungsnetzwerks, zweckmäßigerweise zur Installation einer oder mehrerer Verbrauchswertsendeeinheiten in das Verbrauchswerterfassungsnetzwerk, eine Empfangsbereitschaft mehrfach einzuschalten und auszuschalten. Dadurch ist die Verbrauchswertempfangseinheit vorteilhafterweise alternierend geöffnet oder schlafend, bevorzugt in größeren Zeitscheiben. Auf diese Weise wird während der Installationsbetriebsart der Verbrauchswertempfangseinheit, insbesondere während der Installationsphase des Verbrauchswerterfassungsnetzwerks, die oben bereits beschriebene Energieeinsparung bei der Verbrauchswertempfangseinheit erreicht, da während der Installationsphase des Verbrauchswerterfassungsnetzwerks keine dauerhafte Empfangsbereitschaft der Verbrauchswertempfangseinheit erforderlich ist. Des Weiteren wird dadurch dennoch ein schneller Empfang von Installationstelegrammen und/oder Ankündigungstelegrammen und somit eine schnelle Installation von Verbrauchswerterfassungseinheiten in das Verbrauchswerterfassungsnetzwerk sichergestellt.

Zweckmäßigerweise werden die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Installationstelegramm der jeweiligen Verbrauchswertsendeeinheit von der Verbrauchswertempfangseinheit empfangen wird oder mindestens ein Ankündigungstelegramm und danach das durch das Ankündigungstelegramm angekündigte Installationstelegramm empfangen wird.

Vorzugsweise ist die Verbrauchswertempfangseinheit dazu ausgebildet, die Empfangsbereitschaft in einem Zeitabstand von jeweils mindestens 30 Sekunden und maximal drei Minuten oder maximal vier Minuten einzuschalten, insbesondere in einem Zeitabstand von jeweils 30 Sekunden oder einer Minute oder 90 Sekunden oder zwei Minuten oder drei Minuten oder vier Minuten. Der jeweilige Zeitabstand bezieht sich dabei zweckmäßigerweise auf den zeitlichen Abstand zwischen jeweils zwei aufeinander folgenden Einschaltzeitpunkten, d. h. die jeweiligen beiden aufeinander folgenden Einschaltzeitpunkte weisen einen Zeitabstand von mindestens einer Minute und maximal zwei Minuten auf. Dadurch wird, insbesondere in Verbindung mit der Einschaltzeit, d. h. mit dem Zeitraum, in welchem die Empfangsbereitschaft jeweils eingeschaltet bleibt, ein erheblicher zeitlicher Anteil an einer Gesamtzeit der Installationsphase erreicht, in welchem die Empfangsbereitschaft ausgeschaltet ist, wodurch eine entsprechend erhebliche Energieeinsparung erreicht wird. Des Weiteren wird dadurch dennoch ein schneller Empfang von Installationstelegrammen und somit eine schnelle Installation von Verbrauchswerterfassungseinheiten in das Verbrauchswerterfassungsnetzwerk sichergestellt.

Vorzugsweise ist die Verbrauchswertempfangseinheit dazu ausgebildet, die Empfangsbereitschaft nach dem jeweiligen Einschalten, d. h. ab dem jeweiligen Einschaltzeitpunkt, nach maximal 30 Sekunden auszuschalten, insbesondere nach maximal 25 Sekunden, bevorzugt nach maximal 20 Sekunden, besonders bevorzugt nach maximal 15 Sekunden, vorteilhafterweise nach maximal 10 Sekunden. Dadurch wird, insbesondere in Verbindung mit den Zeitabständen zwischen den Einschaltzeitpunkten, ein erheblicher zeitlicher Anteil an einer Gesamtzeit der Installationsphase erreicht, in welchem die Empfangsbereitschaft ausgeschaltet ist, wodurch eine entsprechend erhebliche Energieeinsparung erreicht wird. Des Weiteren wird dadurch dennoch ein schneller Empfang von Installationstelegrammen und/oder Ankündigungstelegrammen und somit eine schnelle Installation von Verbrauchswerterfassungseinheiten in das Verbrauchswerterfassungsnetzwerk sichergestellt. Wird ein Ankündigungstelegramm empfangen, so kann die beschriebene Vorgehensweise des Einschaltens und Ausschaltens der Empfangsbereitschaft beispielsweise unterbrochen werden, bis das durch das Ankündigungstelegramm angekündigte Installationstelegramm empfangen wurde, und danach fortgesetzt werden. Beispielsweise wird die Empfangsbereitschaft, nachdem das Ankündigungstelegramm empfangen wurde, nicht nach der oben angegebenen Zeit nach dem Einschalten wieder ausgeschaltet, sondern sie verbleibt in Empfangsbereitschaft, bis das Installationstelegramm empfangen wurde, oder die Verbrauchswertempfangseinheit wird, nachdem sie das Ankündigungstelegramm empfangen hat, nicht in dem oben angegebenen Zeitabstand wieder eingeschaltet, sondern vorteilhafterweise früher, nämlich derart, dass sie für das angekündigte Installationstelegramm in Empfangsbereitschaft ist. Der oben angegebene Rhythmus des Einschaltens und Ausschaltens der Empfangsbereitschaft kann durch diese Maßnahme, d. h. durch die Reaktion der Verbrauchswertempfangseinheit, unterbrochen werden, so dass er danach fortgesetzt wird, ohne dass die folgenden Intervalle zeitlich verschoben sind, da durch diese Maßnahme ein oder mehrere vollständige Intervalle ersetzt wurden, oder er kann durch diese Maßnahme, d. h. durch die Reaktion der Verbrauchswertempfangseinheit, zeitlich verschoben werden, indem diese Maßnahme in den oben beschriebenen Ablauf des Einschaltens und Ausschaltens der Empfangsbereitschaft eingefügt wird und somit die folgenden Intervalle zeitlich verschoben werden.

In einer Ausführungsform des Verfahrens zum Betrieb der Verbrauchswertempfangseinheit wird in der Installationsbetriebsart der Verbrauchswertempfangseinheit, insbesondere während der Installationsphase des Verbrauchswerterfassungsnetzwerks, zweckmäßigerweise zur Installation einer oder mehrerer Verbrauchswertsendeeinheiten in das Verbrauchswerterfassungsnetzwerk, die Empfangsbereitschaft der Verbrauchswertempfangseinheit mehrfach eingeschaltet und ausgeschaltet. Daraus resultieren die oben bereits geschilderten Vorteile bezüglich der Energieeinsparungen bei der Verbrauchswertempfangseinheit und bezüglich des schnellen Empfangs von Installationstelegrammen und/oder Ankündigungstelegrammen und der daraus resultierenden schnellen Installation von Verbrauchswertsendeeinheiten in das Verbrauchswerterfassungsnetzwerk.

Zweckmäßigerweise wird die Empfangsbereitschaft in einem Zeitabstand von jeweils mindestens 30 Sekunden und maximal drei Minuten oder maximal vier Minuten eingeschaltet, insbesondere in einem Zeitabstand von jeweils 30 Sekunden oder einer Minute oder 90 Sekunden oder zwei Minuten oder drei Minuten oder vier Minuten. Daraus resultieren die oben bereits geschilderten Vorteile bezüglich der Energieeinsparungen bei der Verbrauchswertempfangseinheit und bezüglich des schnellen Empfangs von Installationstelegrammen und/oder Ankündigungstelegrammen und der daraus resultierenden schnellen Installation von Verbrauchswertsendeeinheiten in das Verbrauchswerterfassungsnetzwerk.

Zweckmäßigerweise wird die Empfangsbereitschaft maximal 30 Sekunden nach dem jeweiligen Einschalten ausgeschaltet, insbesondere maximal 25 Sekunden, bevorzugt maximal 20 Sekunden, besonders bevorzugt maximal 15 Sekunden, vorteilhafterweise nach maximal 10 Sekunden nach dem jeweiligen Einschalten. Daraus resultieren die oben bereits geschilderten Vorteile bezüglich der Energieeinsparungen bei der Verbrauchswertempfangseinheit und bezüglich des schnellen Empfangs von Installationstelegrammen und der daraus resultierenden schnellen Installation von Verbrauchswertsendeeinheiten in das Verbrauchswerterfassungsnetzwerk. Wird ein Ankündigungstelegramm empfangen, wird zweckmäßigerweise auf die oben beschriebene Weise vorgegangen, d. h. dann kann die beschriebene Vorgehensweise des Einschaltens und Ausschaltens der Empfangsbereitschaft beispielsweise unterbrochen werden, bis das durch das Ankündigungstelegramm angekündigte Installationstelegramm empfangen wurde, und danach fortgesetzt werden. Beispielsweise wird die Empfangsbereitschaft, nachdem das Ankündigungstelegramm empfangen wurde, nicht nach der oben angegebenen Zeit nach dem Einschalten wieder ausgeschaltet, sondern sie verbleibt in Empfangsbereitschaft, bis das Installationstelegramm empfangen wurde, oder die Verbrauchswertempfangseinheit wird, nachdem sie das Ankündigungstelegramm empfangen hat, nicht in dem oben angegebenen Zeitabstand wieder eingeschaltet, sondern vorteilhafterweise früher, nämlich derart, dass sie für das angekündigte Installationstelegramm in Empfangsbereitschaft ist. Der oben angegebene Rhythmus des Einschaltens und Ausschaltens der Empfangsbereitschaft kann durch diese Maßnahme, d. h. durch die Reaktion der Verbrauchswertempfangseinheit, unterbrochen werden, so dass er danach fortgesetzt wird, ohne dass die folgenden Intervalle zeitlich verschoben sind, da durch diese Maßnahme ein oder mehrere vollständige Intervalle ersetzt wurden, oder er kann durch diese Maßnahme, d. h. durch die Reaktion der Verbrauchswertempfangseinheit, zeitlich verschoben werden, indem diese Maßnahme in den oben beschriebenen Ablauf des Einschaltens und Ausschaltens der Empfangsbereitschaft eingefügt wird und somit die folgenden Intervalle zeitlich verschoben werden.

In einer Ausführungsform des Verfahrens zum Betrieb der Sender-Empfänger-Anordnung sendet die Verbrauchswertsendeeinheit in der Installationsbetriebsart, insbesondere während der Installation der Verbrauchswertsendeeinheit in das Verbrauchswerterfassungsnetzwerk, vorteilhafterweise in der Installationsphase des Verbrauchswerterfassungsnetzwerks, Installationstelegramme und/oder Ankündigungstelegramme in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Daraus resultieren die oben beschriebenen Vorteile.

Die beschriebene Lösung ermöglicht es, dass die Verbrauchswertsendeeinheit in der Installationsbetriebsart in wesentlich kürzeren Zeitabständen als aus dem Stand der Technik bekannt Installationstelegramme und/oder Ankündigungstelegramme sendet. Die Häufigkeit des Sendens der Istallationstelegramme und/oder Ankündigungstelegramme, d. h. die Sendehäufigkeit und damit der Zeitabstand zwischen den Installationstelegrammen und/oder Ankündigungstelegrammen, wird beispielsweise lediglich durch die Bestimmung und Erhöhung der Kollisionswahrscheinlichkeit begrenzt.

Wie oben bereits erwähnt, werden bzw. sind zweckmäßigerweise die Zeitabstände zwischen dem Senden der Installationstelegramme und/oder Ankündigungstelegramme und das Einschalten und Ausschalten der Empfangsbereitschaft der Verbrauchswertempfangseinheit betreffende Zeitabstände aufeinander abgestimmt. Dadurch wird sichergestellt, dass durch die Wahl der richtigen Parameter, insbesondere der richtigen und zueinander passenden Zeitabstände, mindestens ein Installationstelegramm der jeweiligen Verbrauchswertsendeeinheit von der Verbrauchswertempfangseinheit empfangen wird oder mindestens ein Ankündigungstelegramm und ein dadurch angekündigtes nachfolgendes Installationstelegramm der jeweiligen Verbrauchswertsendeeinheit von der Verbrauchswertempfangseinheit empfangen wird.

Zweckmäßigerweise wird die Empfangsbereitschaft der Vebrauchswertempfangseinheit nach dem jeweiligen Einschalten, d. h. ab dem jeweiligen Einschaltzeitpunkt, nach einem Zeitraum abgeschaltet, welcher einer Sendeperiode P oder einer Mehrzahl von Sendeperioden P, vorzugsweise zuzüglich eines Zeitzuschlags Z von beispielsweise 0,1 s, entspricht, beispielsweise 10,1 s. Die Sendeperiode P oder Periodenzeit ist dabei der Zeitabstand zwischen aufeinanderfolgend gesendeten Installationstelegrammen:
Zeitraum der Empfangsbereitschaft = n * P + Z, wobei 1<=n, wobei zweckmäßigerweise n<=3, wobei der Z im Bereich von 0,1 s liegt, beispielsweise 0 s bis 2 s.

Die Verbrauchswertsendeeinheit sendet zweckmäßigerweise Installationstelegramme und/oder Ankündigungstelegramme in einem vorgegebenen Installationstelegrammsendezeitraum T mit einer vorgegebenen Sendeperiode P, d. h. mit einem vorgegebenen Zeitabstand zwischen aufeinanderfolgend gesendeten Installationstelegrammen und/oder Ankündigungstelegrammen. Die Verbrauchswertempfangseinheit muss daher mindestens einmal innerhalb des Installationstelegrammsendezeitraums T in Empfangsbereitschaft sein, bevorzugt mehrfach innerhalb dieses Installationstelegrammsendezeitraums T, um kürzere Reaktionszeiten zu erzielen. Zweckmäßigerweise sollte die Verbrauchswertempfangseinheit mindestens eine vorgegebene Anzahl s von Installationstelegrammen und/oder Ankündigungstelegrammen von der jeweiligen Verbrauchswertsendeeinheit empfangen, um Verluste durch Kollisionen mit anderen Funkaussendungen oder Störungen auszugleichen und dabei mit hoher Wahrscheinlichkeit mindestens ein Installationstelegramm oder mindestens ein Ankündigungstelegramm und daraufhin das durch das Ankündigungstelegramm angekündigte Installationstelegramm fehlerfrei zu empfangen, und somit über einen Zeitraum von mehreren Sendeperioden (n*P) in Empfangsbereitschaft sein, wie oben bereits beschrieben.

Um dies zu ermöglichen, wird das Verhältnis von Installationstelegrammsendezeitraum zu Sendeperiode (T/P), d. h. das Verhältnis von Installationstelegrammsendezeitraum zu Zeitabstand zwischen zwei Installationstelegrammen und/oder Ankündigungstelegrammen, größer gewählt, als aus dem Stand der Technik bekannt, insbesondere größer als 10, insbesondere viel größer als 10, und größer als die Anzahl s mindestens von der Verbrauchswertempfangseinheit zu empfangender Installationstelegramme und/oder Ankündigungstelegramme der jeweiligen Verbrauchswertsendeeinheit.

Damit können Einsparungen in der Empfangszeit bis zu T/(P*s) erreicht werden.

Zweckmäßigerweise wird daher das Verhältnis von Installationstelegrammsendezeitraum zu Sendeperiode (T/P), d. h. das Verhältnis von Installationstelegrammsendezeitraum zu Zeitabstand zwischen zwei Installationstelegrammen und/oder Ankündigungstelegrammen, größer als aus dem Stand der Technik bekannt, insbesondere aus entsprechenden Normen bekannt, festgelegt. Insbesondere wird hierzu die Sendeperiode, d. h. der Zeitabstand zwischen zwei Installationstelegrammen und/oder Ankündigungstelegrammen, reduziert, d. h. die Installationstelegramme und/oder Ankündigungstelegramme werden in kürzeren Zeitabständen gesendet, insbesondere in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden. Zusätzlich kann beispielsweise auch der Installationstelegrammsendezeitraum T vergrößert werden.

Der Installationstelegrammsendezeitraum, innerhalb welchem die jeweilige Verbrauchswertsendeeinheit die Installationstelegramme und/oder Ankündigungstelegramme in dem oben beschriebenen Zeitabstand sendet, ist zweckmäßigerweise vorgegeben. Dessen Länge bleibt zweckmäßigerweise gleich, auch wenn der Zeitanstand zwischen dem Senden der Installationstelegramme und/oder Ankündigungstelegramme sich verändert, d. h. insbesondere gegenüber dem aus dem Stand der Technik bekannten Zeitabstand reduziert ist. Wird der Zeitabstand verringert und somit die Sendehäufigkeit erhöht, werden somit in diesem Installationstelegrammsendezeitraum eine größere Anzahl Installationstelegramme und/oder Ankündigungstelegramme ausgesendet.

Der Installationstelegrammsendezeitraum beträgt beispielsweise drei Minuten oder ist kürzer oder länger. Der Installationstelegrammsendezeitraum ist zweckmäßigerweise derart vorgegeben, dass die Verbrauchswertempfangseinheit mindestens ein Installationstelegramm und/oder Ankündigungstelegramm, vorteilhafterweise mehrere Installationstelegramme und/oder Ankündigungstelegramme, der jeweiligen Verbrauchswertsendeeinheit empfangen kann. Der Installationstelegrammsendezeitraum kann somit beispielsweise in Abhängigkeit von dem Zeitabstand, in welchem die Installationstelegramme und/oder Ankündigungstelegramme von der jeweiligen Verbrauchswertsendeeinheit gesendet werden, und von dem Zeitabstand, in welchem die Empfangsbereitschaft der Verbrauchswertempfangseinheit eingeschaltet wird sowie von der Zeit, nach welcher die Empfangsbereitschaft wieder ausgeschaltet wird, vorgegeben werden.

Werden von der jeweiligen Verbrauchswertsendeeinheit Ankündigungstelegramme gesendet, welche jeweils das Senden eines jeweils folgenden Installationstelegramms ankündigen, so werden zweckmäßigerweise die Ankündigungstelegramme in dem oben angegebenen Zeitabstand von beispielsweise jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden gesendet. Die Installationstelegramme können dann in einem anderen Zeitabstand gesendet werden, beispielsweise in einem längeren Zeitabstand von zum Beispiel 30 Sekunden bis 60 Sekunden oder in unregelmäßigen Zeitabständen, denn durch das Anündigungstelegramm wird die rechtzeitige Empfangsbereitschaft der Verbrauchswertempfangseinheit für den Empfang des Installationstelegramms sichergestellt, indem durch das Ankündigungstelegramm beispielsweise explizit ein Zeitpunkt, an welchem das angekündigte Installationstelegramm gesendet wird, oder ein Zeitabstand beispielsweise ab dem Senden und/oder Empfangen des Ankündigungstelegramms bis zum Senden des angekündigten Installationstelegramms der Verbrauchswertempfangseinheit mitgeteilt wird oder indem in der Verbrauchswertempfangseinheit ein Zeitabstand ab dem Empfang eines Ankündigungstelegramms fest vorgegeben ist. D. h. in diesem Fall wird der Verbrauchswertempfangseinheit durch das Ankündigungstelegramm der Sendezeitpunkt und/oder Empfangszeitpunkt des angekündigten Installationstelegramms implizit mitgeteilt, da nach dem Empfang des Ankündigungstelegramms der in der Verbrauchswertempfangseinheit vorgegebene Zeitabstand beginnt, an dessen Ende das Installationstelegramm von der Verbrauchswertsendeeinheit gesendet wird, so dass die Verbrauchswertempfangseinheit dann in Empfangsbereitschaft sein muss. Die Verbrauchswertempfangseinheit kann dadurch bis zum Empfang des angekündigten Installationstelegramms in Empfangsbereitschaft bleiben, d. h. diese nicht aussschalten, oder rechtzeitig die Empfangsbereitschaft wieder einschalten, um das angekündigte Installationstelegramm zu empfangen.

Ausführungsbeispiele der Erfindung werden im Folgenden anhand von Zeichnungen näher erläutert.

Darin zeigen:
- Figur 1: eine schematische Darstellung eines Verbrauchswerterfassungsnetzwerks,
- Figur 2: schematisch ein Beispiel einer zeitlichen Abfolge einer Empfangsbereitschaft einer Verbrauchswertempfangseinheit und eines Sendens von Ankündigungstelegrammen und Installationstelegrammen einer Verbrauchswerterfassungseinheit, und
- Figur 3: schematisch ein weiteres Beispiel einer zeitlichen Abfolge einer Empfangsbereitschaft einer Verbrauchswertempfangseinheit und eines Sendens von Ankündigungstelegrammen und Installationstelegrammen einer Verbrauchswerterfassungseinheit.

Einander entsprechende Teile sind in allen Figuren mit den gleichen Bezugszeichen versehen.

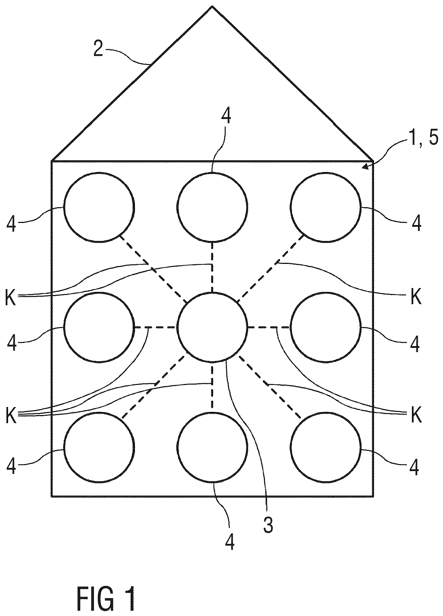

**Figur 1** zeigt eine schematische Darstellung eines Verbrauchswerterfassungsnetzwerks 1, welches beispielsweise in einem Gebäude 2 installiert ist und der Erfassung von Verbrauchswerten dient. Das hier beispielhaft dargestellte Verbrauchswerterfassungsnetzwerk 1 ist als eine Sender-Empfänger-Anordnung 5 ausgebildet und umfasst eine Verbrauchswertempfangseinheit 3 und eine Mehrzahl über eine jeweilige Kommunikationsverbindung K, insbesondere Datenkommunikationsverbindung, mit der Verbrauchswertempfangseinheit 3 verbundene Verbrauchswertsendeeinheiten 4. Die jeweilige Kommunikationsverbindung K ist insbesondere als eine drahtlose Kommunikationsverbindung K ausgebildet, zweckmäßigerweise als eine Funkverbindung. Die jeweilige Kommunikationsverbindung K kann als eine unidirektionale oder bidirektionale Kommunikationsverbindung K ausgebildet sein.

Die Verbrauchswertsendeeinheiten 4 sind im hier dargestellten Beispiel als Verbrauchswerterfassungseinheiten ausgebildet, zum Beispiel als Heizkostenverteiler, Wärmezähler, Wasserzähler, Gaszähler oder Stromzähler. Die Verbrauchswertempfangseinheit 3 ist beispielsweise als eine Verbrauchswertweiterleitungseinheit und/oder als ein Datensammler ausgebildet.

Zumindest die Verbrauchswertempfangseinheit 3 ist batteriebetrieben. Zweckmäßigerweise sind auch die Verbrauchswertsendeeinheiten 4 oder eine oder mehrere Verbrauchswertsendeeinheiten 4 batteriebetrieben.

Zum Aufbau eines solchen Verbrauchswerterfassungsnetzwerks 1 ist eine Installationsphase erforderlich, in welcher die Verbrauchswertsendeeinheiten 4 erstmals ihre jeweilige Kommunikationsverbindung K mit der Verbrauchswertempfangseinheit 3 aufbauen und durch eine initiale Kommunikation mit der Verbrauchswertempfangseinheit 3 in das Verbrauchswerterfassungsnetzwerk 1 eingebunden werden. Hierzu werden die Verbrauchswertsendeeinheiten 4 und die Verbrauchswertempfangseinheit 3 in eine Installationsbetriebsart geschaltet, in welcher die Verbrauchswertsendeeinheiten 4 Installationstelegramme I senden und die Verbrauchswertempfangseinheit 3 zum Empfangen dieser Installationstelegramme I in Empfangsbereitschaft E ist.

Wird ein solches Installationstelegramm I von der Verbrauchswertempfangseinheit 3 empfangen, so wird die jeweilige Verbrauchswertsendeeinheit 4, welche das Installationstelegramm I gesendet hat, im Verbrauchswerterfassungsnetzwerk 1 registriert, zweckmäßigerweise durch die Verbrauchswertempfangseinheit 3 oder durch eine übergeordnete weitere Einheit, an welche das Installationstelegramm I weitergeleitet wird. Die vollständige Registrierung kann dadurch bereits abgeschlossen oder mit einem weiteren Datenaustausch verbunden sein.

Ist die Installationsphase des Verbrauchswerterfassungsnetzwerks 1 abgeschlossen, d. h. sind insbesondere alle erforderlichen Verbrauchswertsendeeinheiten 4 in das Verbrauchswerterfassungsnetzwerk 1 eingebunden oder ist eine vorgegebene Zeit für die Installationsphase abgelaufen oder wurde die Installationsphase durch Bedienungshandlung oder Kommando abgeschlossen, so geht das Verbrauchswerterfassungsnetzwerk 1 in einen Normalbetrieb über, in welchem zu vorgegebenen Zeitpunkten und/oder in vorgegebenen Zeiträumen Datentelegramme mit Verbrauchsdaten von den Verbrauchswertsendeeinheiten 4 zur Verbrauchswertempfangseinheit 3 gesendet und von dieser empfangen werden.

Für den Normalbetrieb des Verbrauchswerterfassungsnetzwerks 1 schaltet zweckmäßigerweise jede Verbrauchswertsendeeinheit 4 nach Ablauf einer vorgegebenen Zeit im Installationsbetrieb, beispielsweise nach Ablauf eines vorgegebenen Telegrammsendezeitraums, insbesondere Installationstelegrammsendezeitraums und/oder Ankündigungstelegrammsendezeitraums, in eine Normalbetriebsart oder es wird jede Verbrauchswertsendeeinheit 4 zweckmäßigerweise nach erfolgreicher Installation, d. h. Einbindung, in das Verbrauchswerterfassungsnetzwerk 1, in die Normalbetriebsart umgeschaltet, wobei diese Umschaltung beispielsweise manuell oder automatisch erfolgen kann. Die Verbrauchswertempfangseinheit 3 wird beispielsweise nach Ablauf einer vorgegebenen Zeit für die Installationsphase und/oder beispielsweise durch Bedienungshandlung und/oder durch Kommando und/oder beispielsweise nachdem alle im Verbrauchswerterfassungsnetzwerk 1 erforderlichen oder für dieses vorgesehenene Verbrauchswertsendeeinheiten 4 in das Verbrauchswerterfassungsnetzwerk 1 eingebunden wurden, in die Normalbetriebsart geschaltet.

Aus dem Stand der Technik ist es bekannt, dass die Verbrauchswertsendeeinheiten 4 während der oben beschriebenen Installationsphase des Verbrauchswerterfassungsnetzwerks 1 in relativ großen Zeitabständen ihre Installationstelegramme I senden. Um zumindest eines dieser Installationstelegramme I der jeweiligen Verbrauchswertsendeeinheit 4 zu empfangen, ist die Verbrauchswertempfangseinheit 3 bei der aus dem Stand der Technik bekannten Vorgehensweise während der gesamten Installationsphase des Verbrauchswerterfassungsnetzwerks 1 permanent offen. D. h. sie ist permanent auf Empfang, es liegt eine ununterbrochene Empfangsbereitschaft E vor. Daraus resultiert ein erheblicher Energieverbrauch der Verbrauchswertempfangseinheit 3 während der Installationsphase des Verbrauchswerterfassungsnetzwerks 1, wodurch eine Lebensdauer, insbesondere bei einer batteriebetriebenen Verbrauchswertempfangseinheit 3, erheblich reduziert wird.

Bei einer Montage von Geräten des Verbrauchswerterfassungsnetzwerks 1, insbesondere der Verbrauchswertsendeeinheiten 4, in einer Liegenschaft, beispielsweise in dem oben gezeigten Gebäude 2, welche beispielsweise acht Stunden pro Tag über drei Tage hinweg andauert, bedeutet dies eine permanente Empfangsbereitschaft E der Verbrauchswertempfangseinheit 3 an diesen drei Tagen für jeweils acht Stunden und somit insgesamt für mindestens 24 Stunden. Insbesondere bei einer batteriebetriebenen Verbrauchswertsendeeinheit 4 wird dadurch deren Lebensdauer erheblich verkürzt.

Die aus dem Stand der Technik bekannte ununterbrochene Empfangsbereitschaft E bezieht sich dabei auf die Installationsphase ohne Berücksichtigung von beispielsweise arbeitszeitrechtlichen Unterbrechungen, beispielsweise über Nacht, d. h. insbesondere bezieht sie sich auf die Installationsbetriebsart der Verbrauchswertempfangseinheit 3. D. h. beispielsweise ein tägliches Abschalten der Installationsbetriebsart oder der gesamten Verbrauchswertempfangseinheit 3, beispielsweise über Nacht, und ein Fortsetzen der Installationsphase am nächsten Tag mit einem Wiedereinschalten der Installationsbetriebsart zählt in diesem Sinne nicht als Unterbrechung der Empfangsbereitschaft E, da sie während der Installationsbetriebsart der Verbrauchswertempfangseinheit 3, d. h. während diese Installationsbetriebsart aktiviert ist, stets ununterbrochen ist.

Bei einem möglichen Ausführungsbeispiel der hier beschriebenen Lösung, bei welchem es sich nicht um einen Teil der Erfindung, sondern um einen Stand der Technik handelt, der das Verständnis der Erfindung erleichtert, wird dieses Problem gelöst, indem die jeweilige Verbrauchswertsendeeinheit 4 in ihrer Installationsbetriebsart, um während der Installationsphase des Verbrauchswerterfassungsnetzwerks 1 ihre Installation in das Verbrauchswerterfassungsnetzwerk 1 zu ermöglichen, häufiger als im Stand der Technik Installationstelegramme I sendet. Vorteilhafterweise sendet sie in der Installationsbetriebsart Installationstelegramme I in einem Zeitabstand von jeweils maximal 25 Sekunden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden.

Des Weiteren ist die Verbrauchswertempfangseinheit 3 in ihrer Installationsbetriebsart während der Installationsphase des Verbrauchswerterfassungsnetzwerks 1 zur Installation einer oder mehrerer Verbrauchswertsendeeinheiten 4 in das Verbrauchswerterfassungsnetzwerk 1 zweckmäßigerweise alternierend geöffnet oder schlafend, bevorzugt in größeren Zeitscheiben alternierend geöffnet oder schlafend, d. h. eine Empfangsbereitschaft E der Verbrauchswertempfangseinheit 3 wird mehrfach eingeschaltet und ausgeschaltet.

Vorteilhafterweise wird die Empfangsbereitschaft E in einem Zeitabstand von jeweils mindestens 30 Sekunden und maximal drei oder vier Minuten eingeschaltet, beispielsweise in einem Zeitabstand von jeweils 30 Sekunden oder einer Minute oder 90 Sekunden oder zwei Minuten oder drei Minuten oder vier Minuten. Zweckmäßigerweise wird die Empfangsbereitschaft maximal 30 Sekunden nach dem jeweiligen Einschalten ausgeschaltet, insbesondere maximal 25 Sekunden, bevorzugt maximal 20 Sekunden, besonders bevorzugt maximal 15 Sekunden, vorteilhafterweise maximal 10 Sekunden nach dem jeweiligen Einschalten.

Zweckmäßigerweise werden die Zeitabstände zwischen dem Senden der Installationstelegramme I und das Einschalten und Ausschalten der Empfangsbereitschaft E der Verbrauchswertempfangseinheit 3, insbesondere diesbezügliche Zeitabstände und/oder Zeitdauern, aufeinander abgestimmt. Dadurch wird sichergestellt, dass durch die Wahl der richtigen Parameter, insbesondere der richtigen und zueinander passenden Zeitabstände und/oder Zeitdauern, mindestens ein Installationstelegramm I der jeweiligen Verbrauchswertsendeeinheit 4 von der Verbrauchswertempfangseinheit 3 empfangen wird.

Durch die beschriebene Lösung wird somit bei der Verbrauchswertempfangseinheit 3 ein im Vergleich zum Stand der Technik wesentlich geringerer Energieverbrauch während der Installationsphase des Verbrauchswerterfassungsnetzwerks 1 erreicht, da die Verbrauchswertempfangseinheit 3 vorteilhafterweise die meiste Zeit schlafend gehalten werden kann, d. h. die Empfangsbereitschaft der Verbrauchswertempfangseinheit 3 ist in der Installationsphase des Verbrauchswerterfassungsnetzwerks 1 und somit während der Installationsbetriebsart der Verbrauchswertempfangseinheit 3 die meiste Zeit ausgeschaltet. Insbesondere wenn die Verbrauchswertempfangseinheit 3 batteriebetrieben ist, wird dadurch eine erheblich längere Lebensdauer der Verbrauchswertempfangseinheit 3 erreicht, da eine derartige Installationsphase des Verbrauchswerterfassungsnetzwerks 1 mit der Installation einer Mehrzahl von Verbrauchswertsendeeinheiten 4 einen Zeitaufwand von mehreren Stunden an einem Tag oder sogar an mehreren Tagen erfordern kann, so dass die Verbrauchswertempfangseinheit 3 eine entsprechend lange Zeit in der Installationsbetriebsart verbleiben muss. Durch die mittels der beschriebenen Lösung ermöglichte mehrfache Unterbrechung der Empfangsbereitschaft E der Verbrauchswertempfangseinheit 3 wird daher eine entsprechend große Energieeinsparung erreicht.

Nach der Installation der jeweiligen Verbrauchswertsendeeinheit 4 und/oder nach Ablauf einer vorgegebenen Zeit, beispielsweise nach Ablauf des vorgegebenen Installationstelegrammsendezeitraums, wird zweckmäßigerweise deren Installationsbetriebsart abgeschaltet, d. h. sie wechselt dann in die Normalbetriebsart. Nach Abschluss der Installationsphase wird zweckmäßigerweise auch die Installationsbetriebsart der Verbrauchswertempfangseinheit 3 abgeschaltet, d. h. sie wechselt dann ebenfalls in die Normalbetriebsart.

In einem anderen, erfindungsgemäßen, Ausführungsbeispiel werden von der jeweiligen Verbrauchswertsendeeinheit 4 an Stelle der Installationstelegramme I Ankündigungstelegramme A auf die oben beschriebene Weise gesendet, welche jeweils das nachfolgende Senden eines Installationstelegramms I ankündigen. Dabei kann vorgesehen sein, dass jedes Ankündigungstelegramm A das Senden jeweils eines nachfolgenden Installationstelegramms I ankündigt, d. h. es wird von der Verbrauchswertsendeeinheit 4 nach dem Senden des Ankündigungstelegramms A das durch dieses Ankündigungstelegramm A angekündigte Installationstelegramm I gesendet. Vorteilhafterweise ist jedoch vorgesehen, dass von der jeweiligen Verbrauchswertsendeeinheit 4 mehrere Ankündigungstelegramme A gesendet werden, welche das nachfolgende Senden desselben Installationstelegramms I ankündigen. D. h. es werden mehrere Ankündigungstelegramme A gesendet, welche jeweils das nachfolgende Senden desselben Installationstelegramms I ankündigen, und danach wird das durch diese Ankündigungstelegramme A angekündigte Installationstelegramm I gesendet.

Das Einschalten und Ausschalten der Empfangsbereitschaft E der Verbrauchswertempfangseinheit 3 erfolgt dabei zunächst auf die oben beschriebene Weise. Dadurch wird sichergestellt, dass von der Verbrauchswertempfangseinheit 3, wenn nicht sofort das Installationstelegramm I empfangen wird, so doch zumindest eines der Ankündigungstelegramme A empfangen wird. Durch dieses Ankündigungstelegramm A wird die Verbrauchswertempfangseinheit 3 über das folgende Senden des Installationstelegramms I informiert, d. h. beispielsweise explizit durch einen Telegramminhalt des Ankündigungstelegramms A über einen Zeitpunkt, zu welchem das Installationstelegramm I gesendet wird, oder über eine vorgegebene Zeit, d. h. einen Zeitabstand, ab dem Senden und/oder Empfangen des Ankündigungstelegramms A, nach welchem das Installationstelegramm I gesendet wird, oder implizit, indem in der Verbrauchswertempfangseinheit 3 eine vorgegebene Zeit, d. h. ein Zeitabstand, ab dem Empfang des Ankündigungstelegramms A bis zum Senden und/oder Empfangen des angekündigten Installationstelegramms I fest vorgegeben ist. Das empfangene Ankündigungstelegramm A löst somit den Beginn dieses Zeitabstands aus, an dessen Ende die Verbrauchswertempfangseinheit 3 in Empfangsbereitschaft E sein muss, um das angekündigte Installationstelegramm I, welches von der Verbrauchswertsendeeinheit 4 gesendet wird, zu empfangen.

Die Verbrauchswertempfangseinheit 3 passt daraufhin zweckmäßigerweise ihre Empfangsbereitschaft E an, um für das angekündigte von der Verbrauchswertsendeeinheit 4 gesendete Installationstelegramm I auf Empfangsbereitschaft E zu sein, d. h. zum durch das Ankündigungstelegramm A angekündigten Zeitpunkt oder nach dem durch das Ankündigungstelegramm A angekündigten Zeitabstand. Beispielsweise verbleibt die Verbrauchswertempfangseinheit 3 in Empfangsbereitschaft E oder schaltet sie derart ein, dass sie zum durch das Ankündigungstelegramm A angekündigten Zeitpunkt oder nach dem durch das Ankündigungstelegramm A angekündigten Zeitabstand in Empfangsbereitschaft E ist.

Der oben angegebene Rhythmus des Einschaltens und Ausschaltens der Empfangsbereitschaft E kann dadurch verschoben werden, indem die beschriebene Vorgehensweise für das rechtzeitige Vorliegen der Empfangsbereitschaft E zum Empfang des angekündigten Installationstelegramms I eingeschoben wird, oder es können ein oder mehrere Intervalle dieses Rhythmus durch die beschriebene Vorgehensweise für das rechtzeitige Vorliegen der Empfangsbereitschaft E zum Empfang des angekündigten Installationstelegramms I vollständig ersetzt werden, so dass die nicht ersetzten Intervalle zeitlich nicht verschoben werden, um das Empfangen anderer Ankündigungstelegramme A und/oder Installationstelegramme I von anderen Verbrauchswertsendeeinheiten 4 nicht zu gefährden.

Durch die Verwendung der Ankündigungstelegramme A können die Installationstelegramme I beispielsweise in größeren Zeitabständen gesendet werden als die Ankündigungstelegramme A, zum Beispiel in Zeitabständen von 30 Sekunden bis 60 Sekunden, um beispielsweise Normvorgaben, beispielsweise einer DIN-EN-Norm, zum Beispiel der DIN EN 13757-4:2005, einzuhalten, oder sie können in unregelmäßigen Zeitabständen gesendet werden, und dennoch wird es ermöglicht, die Empfangsbereitschaft E der Verbrauchswertempfangseinheit 3 abwechselnd einzuschalten und auszuschalten, da von der Verbrauchswertempfangseinheit 3, wenn nicht sofort eines der Installationstelegramme I empfangen wird, so doch zumindest eines der Ankündigungstelegramme A empfangen wird und daraufhin die Empfangsbereitschaft E der Verbrauchswertempfangseinheit 3 angepasst wird, um das angekündigte Installationstelegramm I zu empfangen.

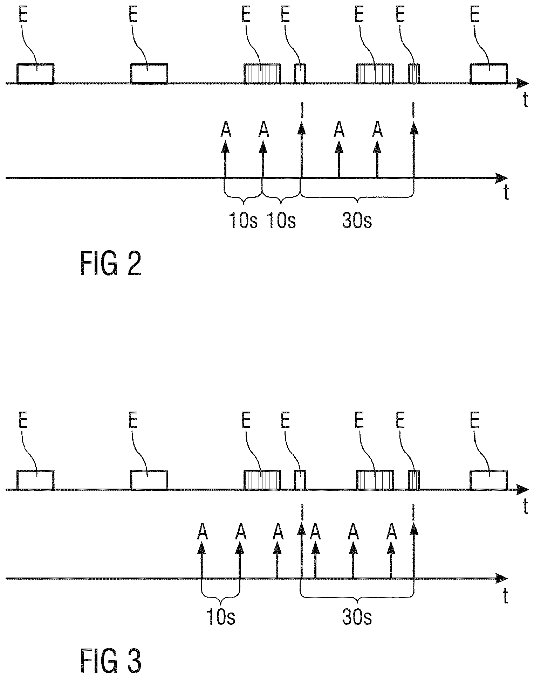

Die **Figuren 2 und 3** zeigen zwei Beispiele der Empfangsbereitschaft E der Verbrauchswertempfangseinheit 3 und des Sendens von Ankündigungstelegrammen A und Installationstelegrammen I einer Verbrauchswerterfassungseinheit im Zeitverlauf t.

Im Beispiel gemäß **Figur 2** ist die Empfangsbereitschaft E der Verbrauchswertempfangseinheit 3 regulär für eine Periode eingeschaltet und für zwei Perioden ausgeschaltet. Die Verbrauchswertsendeeinheit 4 sendet Sequenzen von jeweils zwei Ankündigungstelegrammen A und einem Installationstelegramm I. Die Ankündigungstelegramme A werden in einem Zeitabstand von 10 Sekunden (10s) gesendet und danach, genauer gesagt nach 10 Sekunden (10s) nach dem zweiten Ankündigungstelegramm A der jeweiligen Sequenz, wird das durch diese Ankündigungstelegramme A angekündigte Installationstelegramm I gesendet. Danach, genauer gesagt nach weiteren 10 Sekunden (10s), nach dem Installationstelegramm I der vorhergehenden Sequenz werden die beiden Ankündigungstelegramme A der nächsten Sequenz gesendet, ebenfalls in einem Zeitabstand von 10 Sekunden (10s), und danach, genauer gesagt nach 10 Sekunden (10s) nach dem zweiten Ankündigungstelegramm A, wird das durch diese Ankündigungstelegramme A angekündigte Installationstelegramm I gesendet. Die Installationstelegramme I werden somit in einem Zeitabstand von 30 Sekunden (30s) gesendet. Dies entspricht beispielsweise einer Normvorgabe, zum Beispiel einer DIN-EN-Norm.

Wie aus **Figur 2** ersichtlich, fällt im dargestellten Beispiel das zweite Ankündigungstelegramm A der jeweiligen Sequenz in die eingeschaltete Empfangsbereitschaft E der Verbrauchswertempfangseinheit 3 und wird daher von der Verbrauchswertempfangseinheit 3 empfangen. Diese eingeschaltete Empfangsbereitschaft E ist zur Verdeutlichung schraffiert dargestellt. Dadurch schaltet die Verbrauchswertempfangseinheit 3 nachfolgend erneut für eine kürzere Zeit ihre Empfangsbereitschaft E ein, um das durch das empfangene Ankündigungstelegramm A angekündigte nachfolgende Installationstelegramm I zu empfangen. Diese eingeschaltete Empfangsbereitschaft E ist zur Verdeutlichung ebenfalls schraffiert dargestellt. Der Zeitpunkt dieses zusätzlichen Einschaltens der Empfangsbereitschaft E wird der Verbrauchswertempfangseinheit 3 vorteilhafterweise durch das Ankündigungstelegramm A mitgeteilt. Durch diese Vorgehensweise ist kein dauerhaftes Einschalten der Empfangsbereitschaft E erforderlich, wodurch eine Energieeinsparung bei der Verbrauchswertempfangseinheit 3 erreicht wird.

Im dargestellten Beispiel werden zwei Installationstelegramme I der Verbrauchswertsendeeinheit 4 empfangen, beispielsweise aus Sicherheitsgründen, um eine sichere Installation zu ermöglichen. In anderen Beispielen kann die zweite Sequenz aus Ankündigungstelegrammen A und Installationstelegramm I beispielsweise auch durch eine weitere an der Verbrauchswertempfangseinheit 3 zu installierende Verbrauchswertsendeeinheit 4 gesendet werden.

Im Beispiel gemäß **Figur 3** ist die Empfangsbereitschaft E der Verbrauchswertempfangseinheit 3 ebenfalls regulär für eine Periode eingeschaltet und für zwei Perioden ausgeschaltet. Die Verbrauchswertsendeeinheit 4 sendet Sequenzen von jeweils drei Ankündigungstelegrammen A und einem Installationstelegramm I. Die Ankündigungstelegramme A werden in einem Zeitabstand von 10 Sekunden (10s) gesendet und danach, in einem kürzeren Zeitabstand, d. h. nach weniger als 10 Sekunden, nach dem dritten Ankündigungstelegramm A der jeweiligen Sequenz, wird das durch diese Ankündigungstelegramme A angekündigte Installationstelegramm I gesendet. Nach Abschluss einer Sequenz werden die drei Ankündigungstelegramme A der nächsten Sequenz gesendet, ebenfalls in einem Zeitabstand von 10 Sekunden (10s), wobei das erste Ankündigungstelegramm A der nachfolgenden Sequenz in einem Zeitabstand von 10 Sekunden (10s) zum letzten Ankündigungstelegramm A der vorhergehenden Sequenz gesendet wird. Auch bei dieser nachfolgenden Sequenz wird wieder das durch die Ankündigungstelegramme A dieser Sequenz angekündigte Installationstelegramm I in einem kürzeren Zeitabstand, d. h. nach weniger als 10 Sekunden, nach dem dritten Ankündigungstelegramm A dieser Sequenz gesendet. Somit werden bei diesem Beispiel alle Ankündigungstelegramme A in einem Zeitabstand von 10 Sekunden (10s) gesendet und die angekündigten Installationstelegramme I werden zwischen zwei Ankündigungstelegrammen A gesendet, genauer gesagt zwischen dem letzten Ankündigungstelegramm A, welches das jeweilige Installationstelegramm I ankündigt, und dem ersten Ankündigungstelegramm A, welches das nächste Installationstelegramm I ankündigt. Die Installationstelegramme I werden auch hier in einem Zeitabstand von 30 Sekunden (30s) gesendet. Dies entspricht beispielsweise einer Normvorgabe, zum Beispiel einer DIN-EN-Norm.

Wie aus **Figur 3** ersichtlich, fällt im dargestellten Beispiel das dritte Ankündigungstelegramm A der jeweiligen Sequenz in die eingeschaltete Empfangsbereitschaft E der Verbrauchswertempfangseinheit 3 und wird daher von der Verbrauchswertempfangseinheit 3 empfangen. Diese eingeschaltete Empfangsbereitschaft E ist zur Verdeutlichung schraffiert dargestellt. Dadurch schaltet die Verbrauchswertempfangseinheit 3 nachfolgend erneut für eine kürzere Zeit ihre Empfangsbereitschaft E ein, um das durch das empfangene Ankündigungstelegramm A angekündigte nachfolgende Installationstelegramm I zu empfangen. Diese eingeschaltete Empfangsbereitschaft E ist zur Verdeutlichung ebenfalls schraffiert dargestellt. Der Zeitpunkt dieses zusätzlichen Einschaltens der Empfangsbereitschaft E wird der Verbrauchswertempfangseinheit 3 vorteilhafterweise durch das Ankündigungstelegramm A mitgeteilt. Durch diese Vorgehensweise ist kein dauerhaftes Einschalten der Empfangsbereitschaft E erforderlich, wodurch eine Energieeinsparung bei der Verbrauchswertempfangseinheit 3 erreicht wird.

Im dargestellten Beispiel werden zwei Installationstelegramme I der Verbrauchswertsendeeinheit 4 empfangen, beispielsweise aus Sicherheitsgründen, um eine sichere Installation zu ermöglichen. In anderen Beispielen kann die zweite Sequenz aus Ankündigungstelegrammen A und Installationstelegramm I beispielsweise auch durch eine weitere an der Verbrauchswertempfangseinheit 3 zu installierende Verbrauchswertsendeeinheit 4 gesendet werden.

### BEZUGSZEICHENLISTE

- 1: Verbrauchswerterfassungsnetzwerk
- 2: Gebäude
- 3: Verbrauchswertempfangseinheit
- 4: Verbrauchswertsendeeinheit
- 5: Sender-Empfänger-Anordnung

- A: Ankündigungstelegramm
- E: eingeschaltete Empfangsbereitschaft
- I: Installationstelegramm
- K: Kommunikationsverbindung
- t: Zeitverlauf

## Patentansprüche

1. Verbrauchswertsendeeinheit (4), insbesondere Verbrauchswerterfassungseinheit und/oder Verbrauchswertweiterleitungseinheit, welche dazu ausgebildet ist, in einer Installationsbetriebsart Ankündigungstelegramme (A) in einem Zeitabstand von jeweils maximal 25 Sekunden zu senden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, und nach dem Senden eines Ankündigungstelegramms (A) oder mehrerer Ankündigungstelegramme (A) mindestens ein dadurch angekündigtes Installationstelegramm (I) zu senden.

2. Verbrauchswertsendeeinheit (4) nach Anspruch 1, welche dazu ausgebildet ist, in der Installationsbetriebsart mehrere Ankündigungstelegramme (A) in einem Zeitabstand von jeweils maximal 25 Sekunden zu senden, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, welche das nachfolgende Senden desselben mindestens einen Installationstelegramms (I) ankündigen, und danach das mindestens eine durch diese Ankündigungstelegramme (A) angekündigte Installationstelegramm (I) zu senden.

3. Verfahren zum Betrieb einer Verbrauchswertsendeeinheit (4) nach Anspruch 1 oder 2, wobei die Verbrauchswertsendeeinheit (4) in der Installationsbetriebsart Ankündigungstelegramme (A) in einem Zeitabstand von jeweils maximal 25 Sekunden sendet, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, und nach dem Senden eines Ankündigungstelegramms (A) oder mehrerer Ankündigungstelegramme (A) mindestens ein dadurch angekündigtes Installationstelegramm (I) sendet.

4. Verfahren nach Anspruch 3, wobei die Verbrauchswertsendeeinheit (4) in der Installationsbetriebsart Ankündigungstelegramme (A) in einem Zeitabstand von jeweils maximal 25 Sekunden sendet, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, welche das nachfolgende Senden desselben mindestens einen Installationstelegramms (I) ankündigen, und danach das mindestens eine durch diese Ankündigungstelegramme (A) angekündigte Installationstelegramm (I) sendet.

5. Verbrauchswertempfangseinheit (3), insbesondere Verbrauchswertweiterleitungseinheit und/oder Datensammler, welche dazu ausgebildet ist, in einer Installationsbetriebsart eine Empfangsbereitschaft (E) mehrfach einzuschalten und auszuschalten, wobei die Verbrauchswertempfangseinheit (3) dazu ausgebildet ist, die Empfangsbereitschaft (E) in einem Zeitabstand einzuschalten und nach dem jeweiligen Einschalten nach maximal 30 Sekunden auszuschalten, insbesondere nach maximal 25 Sekunden, bevorzugt nach maximal 20 Sekunden, besonders bevorzugt nach maximal 15 Sekunden, vorteilhafterweise nach maximal 10 Sekunden, **dadurch gekennzeichnet, dass** die Verbrauchswertempfangseinheit (3) dazu ausgebildet ist, die Empfangsbereitschaft (E) im Zeitabstand von jeweils einer Minute oder 90 Sekunden oder zwei Minuten oder drei Minuten oder vier Minuten einzuschalten, um wenn nicht sofort ein Installationstelegramm (I) empfangen wird, zumindest ein von der Verbrauchswertsendeeinheit (4) gesendetes Ankündigungstelegramm (A) zu empfangen, durch welches die Verbrauchswertempfangseinheit (3) über ein folgendes Senden des Installationstelegramms (I) informiert wird, woraufhin die Verbrauchswertempfangseinheit (3) ihre Empfangsbereitschaft (E) anpasst, um für das angekündigte von der Verbrauchswertsendeeinheit (4) gesendete Installationstelegramm (I) auf Empfangsbereitschaft (E) zu sein.

6. Verfahren zum Betrieb einer Verbrauchswertempfangseinheit (3) nach Anspruch 5, wobei in der Installationsbetriebsart eine Empfangsbereitschaft (E) mehrfach eingeschaltet und ausgeschaltet wird, wobei die Empfangsbereitschaft (E) in einem Zeitabstand eingeschaltet wird und nach dem jeweiligen Einschalten nach maximal 30 Sekunden ausgeschaltet wird, insbesondere nach maximal 25 Sekunden, bevorzugt nach maximal 20 Sekunden, besonders bevorzugt nach maximal 15 Sekunden, vorteilhafterweise nach maximal 10 Sekunden, **dadurch gekennzeichnet, dass** die Empfangsbereitschaft (E) im Zeitabstand von jeweils einer Minute oder 90 Sekunden oder zwei Minuten oder drei Minuten oder vier Minuten eingeschaltet wird, um wenn nicht sofort ein Installationstelegramm (I) empfangen wird, zumindest ein von der Verbrauchswertsendeeinheit (4) gesendetes Ankündigungstelegramm (A) zu empfangen, durch welches die Verbrauchswertempfangseinheit (3) über ein folgendes Senden des Installationstelegramms (I) informiert wird, woraufhin die Verbrauchswertempfangseinheit (3) ihre Empfangsbereitschaft (E) anpasst, um für das angekündigte von der Verbrauchswertsendeeinheit (4) gesendete Installationstelegramm (I) auf Empfangsbereitschaft (E) zu sein.

7. Sender-Empfänger-Anordnung (5), umfassend zumindest eine Verbrauchswertempfangseinheit (3), insbesondere Verbrauchswertweiterleitungseinheit und/oder Datensammler, welche dazu ausgebildet ist, in einer Installationsbetriebsart eine Empfangsbereitschaft (E) mehrfach einzuschalten und auszuschalten, und zumindest eine Verbrauchswertsendeeinheit (4) nach Anspruch 1 oder 2.

8. Sender-Empfänger-Anordnung (5) nach Anspruch 7, wobei die Verbrauchswertempfangseinheit (3) dazu ausgebildet ist, die Empfangsbereitschaft (E) in einem Zeitabstand von jeweils mindestens 30 Sekunden und maximal drei Minuten oder maximal vier Minuten einzuschalten, insbesondere in einem Zeitabstand von jeweils 30 Sekunden oder einer Minute oder 90 Sekunden oder zwei Minuten oder drei Minuten oder vier Minuten.

9. Sender-Empfänger-Anordnung (5) nach Anspruch 7 oder 8, wobei die Verbrauchswertempfangseinheit (3) dazu ausgebildet ist, die Empfangsbereitschaft (E) nach dem jeweiligen Einschalten nach maximal 30 Sekunden auszuschalten, insbesondere nach maximal 25 Sekunden, bevorzugt nach maximal 20 Sekunden, besonders bevorzugt nach maximal 15 Sekunden, vorteilhafterweise nach maximal 10 Sekunden.

10. Verfahren zum Betrieb einer Sender-Empfänger-Anordnung (5) nach einem der Ansprüche 7 bis 9, wobei die Verbrauchswertsendeeinheit (4) in der Installationsbetriebsart Ankündigungstelegramme (A) in einem Zeitabstand von jeweils maximal 25 Sekunden sendet, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, und nach dem Senden eines Ankündigungstelegramms (A) oder mehrerer Ankündigungstelegramme (A) mindestens ein dadurch angekündigtes Installationstelegramm (I) sendet.

11. Verfahren nach Anspruch 10, wobei die Verbrauchswertsendeeinheit (4) in der Installationsbetriebsart Ankündigungstelegramme (A) in einem Zeitabstand von jeweils maximal 25 Sekunden sendet, insbesondere in einem Zeitabstand von jeweils maximal 20 Sekunden, bevorzugt in einem Zeitabstand von jeweils maximal 15 Sekunden, besonders bevorzugt in einem Zeitabstand von jeweils maximal 10 Sekunden, welche das nachfolgende Senden desselben mindestens einen Installationstelegramms (I) ankündigen, und danach das mindestens eine durch diese Ankündigungstelegramme (A) angekündigte Installationstelegramm (I) sendet.

12. Verfahren nach Anspruch 10 oder 11, wobei in der Installationsbetriebsart der Verbrauchswertempfangseinheit (3) eine Empfangsbereitschaft (E) der Verbrauchswertempfangseinheit (3) mehrfach eingeschaltet und ausgeschaltet wird.

13. Verfahren nach Anspruch 12, wobei die Empfangsbereitschaft (E) in einem Zeitabstand von jeweils mindestens 30 Sekunden und maximal drei Minuten oder vier Minuten eingeschaltet wird, insbesondere in einem Zeitabstand von jeweils 30 Sekunden oder einer Minute oder 90 Sekunden oder zwei Minuten oder drei Minuten oder vier Minuten.

14. Verfahren nach Anspruch 12 oder 13, wobei die Empfangsbereitschaft (E) nach dem jeweiligen Einschalten nach maximal 30 Sekunden ausgeschaltet wird, insbesondere nach maximal 25 Sekunden, bevorzugt nach maximal 20 Sekunden, besonders bevorzugt nach maximal 15 Sekunden, vorteilhafterweise nach maximal 10 Sekunden.

## Claims

1. Consumption value transmitting unit (4), in particular consumption value recording unit and/or consumption value forwarding unit, which is designed so as, in an installation operating mode, to transmit announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, and, after transmission of an announcement telegram (A) or of a plurality of announcement telegrams (A), to transmit at least one installation telegram (I) announced thereby.

2. Consumption value transmitting unit (4) according to Claim 1, which is designed so as, in the installation operating mode, to transmit a plurality of announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, said announcement telegrams (A) announcing the subsequent transmission of the same at least one installation telegram (I), and then to transmit the at least one installation telegram (I) announced by said announcement telegrams (A).

3. Method for operating a consumption value transmitting unit (4) according to Claim 1 or 2, wherein, in the installation operating mode, the consumption value transmitting unit (4) transmits announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, and, after transmission of an announcement telegram (A) or of a plurality of announcement telegrams (A), transmits at least one installation telegram (I) announced thereby.

4. Method according to Claim 3, wherein, in the installation operating mode, the consumption value transmitting unit (4) transmits announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, said announcement telegrams (A) announcing the subsequent transmission of the same at least one installation telegram (I), and then transmits the at least one installation telegram (I) announced by said announcement telegrams (A).

5. Consumption value receiving unit (3), in particular consumption value forwarding unit and/or data collector, which is designed so as, in an installation operating mode, to repeatedly switch a ready-to-receive state (E) on and off, wherein the consumption value receiving unit (3) is designed to switch the ready-to-receive state (E) on at a time interval and, after the respective switching-on operation, to switch it off after at most 30 seconds, in particular after at most 25 seconds, preferably after at most 20 seconds, particularly preferably after at most 15 seconds, advantageously after at most 10 seconds, **characterized in that** the consumption value receiving unit (3) is designed to switch the ready-to-receive state (E) on at a time interval of in each case one minute or 90 seconds or two minutes or three minutes or four minutes in order, if an installation telegram (I) is not received immediately, to receive at least one announcement telegram (A) transmitted by the consumption value transmitting unit (4), by which announcement telegram (A) the consumption value receiving unit (3) is informed of an upcoming transmission of the installation telegram (I), whereupon the consumption value receiving unit (3) adapts its ready-to-receive state (E) in order to be ready to receive (E) the announced installation telegram (I) transmitted by the consumption value transmitting unit (4).

6. Method for operating a consumption value receiving unit (3) according to Claim 5, wherein, in the installation operating mode, a ready-to-receive state (E) is repeatedly switched on and off, wherein the ready-to-receive state (E) is switched on at a time interval and, after the respective switching-on operation, is switched off after at most 30 seconds, in particular after at most 25 seconds, preferably after at most 20 seconds, particularly preferably after at most 15 seconds, advantageously after at most 10 seconds, **characterized in that** the ready-to-receive state (E) is switched on at a time interval of in each case one minute or 90 seconds or two minutes or three minutes or four minutes in order, if an installation telegram (I) is not received immediately, to receive at least one announcement telegram (A) transmitted by the consumption value transmitting unit (4), by which announcement telegram (A) the consumption value receiving unit (3) is informed of an upcoming transmission of the installation telegram (I), whereupon the consumption value receiving unit (3) adapts its ready-to-receive state (E) in order to be ready to receive (E) the announced installation telegram (I) transmitted by the consumption value transmitting unit (4).

7. Transmitter/receiver arrangement (5) comprising at least one consumption value receiving unit (3), in particular a consumption value forwarding unit and/or data collector, which is designed so as, in an installation operating mode, to repeatedly switch a ready-to-receive state (E) on and off, and at least one consumption value transmitting unit (4) according to Claim 1 or 2.

8. Transmitter/receiver arrangement (5) according to Claim 7, wherein the consumption value receiving unit (3) is designed to switch the ready-to-receive state (E) on at a time interval of in each case at least 30 seconds and at most three minutes or at most four minutes, in particular at a time interval of in each case 30 seconds or one minute or 90 seconds or two minutes or three minutes or four minutes.

9. Transmitter/receiver arrangement (5) according to Claim 7 or 8, wherein the consumption value receiving unit (3) is designed to switch the ready-to-receive state (E) off, after the respective switching-on operation, after at most 30 seconds, in particular after at most 25 seconds, preferably after at most 20 seconds, particularly preferably after at most 15 seconds, advantageously after at most 10 seconds.

10. Method for operating a transmitter/receiver arrangement (5) according to one of Claims 7 to 9, wherein, in the installation operating mode, the consumption value transmitting unit (4) transmits announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, and, after transmission of an announcement telegram (A) or of a plurality of announcement telegrams (A), transmits at least one installation telegram (I) announced thereby.

11. Method according to Claim 10, wherein, in the installation operating mode, the consumption value transmitting unit (4) transmits announcement telegrams (A) at a time interval of in each case at most 25 seconds, in particular at a time interval of in each case at most 20 seconds, preferably at a time interval of in each case at most 15 seconds, particularly preferably at a time interval of in each case at most 10 seconds, said announcement telegrams (A) announcing the subsequent transmission of the same at least one installation telegram (I), and then transmits the at least one installation telegram (I) announced by said announcement telegrams (A).

12. Method according to Claim 10 or 11, wherein, in the installation operating mode of the consumption value receiving unit (3), a ready-to-receive state (E) of the consumption value receiving unit (3) is repeatedly switched on and off.

13. Method according to Claim 12, wherein the ready-to-receive state (E) is switched on at a time interval of in each case at least 30 seconds and at most three minutes or four minutes, in particular at a time interval of in each case 30 seconds or one minute or 90 seconds or two minutes or three minutes or four minutes.

14. Method according to Claim 12 or 13, wherein the ready-to-receive state (E) is switched off, after the respective switching-on operation, after at most 30 seconds, in particular after at most 25 seconds, preferably after at most 20 seconds, particularly preferably after at most 15 seconds, advantageously after at most 10 seconds.

## Revendications

1. Unité d'émission de valeur de consommation (4), en particulier unité d'acquisition de valeur de consommation et/ou unité de retransmission de valeur de consommation, qui est réalisée dans un mode installation pour envoyer des télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, et pour envoyer après l'envoi d'un télégramme d'annonce (A) ou de plusieurs télégrammes d'annonce (A) au moins un télégramme d'installation (I) ainsi annoncé.

2. Unité d'émission de valeur de consommation (4) selon la revendication 1, qui est réalisée en mode installation pour envoyer plusieurs télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, qui annoncent l'envoi suivant du même au moins un télégramme d'installation (I), et pour envoyer ensuite ledit au moins un télégramme d'installation (I) annoncé par ces télégrammes d'annonce (A).

3. Procédé d'exploitation d'une unité d'émission de valeur de consommation (4) selon la revendication 1 ou 2, l'unité d'émission de valeur de consommation (4) envoyant en mode installation des télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, et après l'envoi d'un télégramme d'annonce (A) ou de plusieurs télégrammes d'annonce (A) au moins un télégramme d'installation (I) ainsi annoncé.

4. Procédé selon la revendication 3, dans lequel l'unité d'émission de valeur de consommation (4) envoie en mode installation des télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, qui annoncent l'envoi suivant du même au moins un télégramme d'installation (I), et envoie ensuite ledit au moins un télégramme d'installation (I) annoncé par ces télégrammes d'annonce (A).

5. Unité de réception de valeur de consommation (3), en particulier unité de retransmission de valeur de consommation et/ou collecteur de données, qui est réalisée dans un mode installation, pour activer et désactiver à plusieurs reprises une disponibilité de réception (E), l'unité de réception de valeur de consommation (3) étant réalisée pour activer la disponibilité de réception (E) dans un intervalle de temps, et pour la désactiver après l'activation respective après 30 secondes maximum, en particulier après 25 secondes maximum, de préférence après 20 secondes maximum, de manière particulièrement préférée après 15 secondes maximum, avantageusement après 10 secondes maximum,
**caractérisée en ce que** l'unité de réception de valeur de consommation (3) est réalisée pour activer la disponibilité de réception (E) dans un intervalle de temps respectivement d'une minute ou de 90 secondes ou de deux minutes ou de trois minutes ou de quatre minutes afin de recevoir, si aucun télégramme d'installation (I) n'est reçu immédiatement, au moins un télégramme d'annonce (A) envoyé par l'unité d'émission de valeur de consommation (4) par lequel l'unité de réception de valeur de consommation (3) est informée d'un envoi suivant du télégramme d'installation (I), après quoi l'unité de réception de valeur de consommation (3) adapte sa disponibilité de réception (E) afin d'être en disponibilité de réception (E) pour le télégramme d'installation (I) envoyé par l'unité d'émission de valeur de consommation (4).

6. Procédé d'exploitation d'une unité de réception de valeur de consommation (3) selon la revendication 5, dans lequel en mode installation, une disponibilité de réception (E) est activée et désactivée à plusieurs reprises, la disponibilité de réception (E) étant activée dans un intervalle de temps et est désactivée après l'activation respective, après 30 secondes maximum, en particulier après 25 secondes maximum, de préférence après 20 secondes maximum, de manière particulièrement préférée après 15 secondes maximum, avantageusement après 10 secondes maximum,
**caractérisé en ce que** la disponibilité de réception (E) est activée dans un intervalle de temps respectivement d'une minute ou de 90 secondes ou de deux minutes ou de trois minutes ou de quatre minutes afin de recevoir, si aucun télégramme d'installation (I) n'est reçu immédiatement, au moins un télégramme d'annonce (A) envoyé par l'unité d'émission de valeur de consommation (4) par lequel l'unité de réception de valeur de consommation (3) est informée d'un envoi suivant du télégramme d'installation (I), après quoi l'unité de réception de valeur de consommation (3) adapte sa disponibilité de réception (E) afin d'être en disponibilité de réception (E) pour le télégramme d'installation (I) annoncé, envoyé par l'unité d'émission de valeur de consommation (4).

7. Agencement émetteur/récepteur (5), comprenant au moins une unité de réception de valeur de consommation (3), en particulier unité de retransmission de valeur de consommation et/ou collecteur de données, qui est réalisée dans un mode installation pour activer et désactiver à plusieurs reprises une disponibilité de réception (E), et au moins une unité d'émission de valeur de consommation (4) selon la revendication 1 ou 2.

8. Agencement émetteur/récepteur (5) selon la revendication 7, dans lequel l'unité de réception de valeur de consommation (3) est réalisée pour activer la disponibilité de réception (E) dans un intervalle de temps respectivement d'au moins 30 secondes et au maximum de trois minutes ou au maximum de quatre minutes, en particulier dans un intervalle de temps respectivement de 30 secondes ou d'une minute ou de 90 secondes ou de deux minutes ou de trois minutes ou de quatre minutes.

9. Agencement émetteur/récepteur (5) selon la revendication 7 ou 8, dans lequel l'unité de réception de valeur de consommation (3) est réalisée pour désactiver la disponibilité de réception (E) après l'activation respective après 30 secondes maximum, en particulier après 25 secondes maximum, de préférence après 20 secondes maximum, de manière particulièrement préférée après 15 secondes maximum, avantageusement après 10 secondes maximum.

10. Procédé d'exploitation d'un agencement émetteur/récepteur (5) selon l'une quelconque des revendications 7 à 9, dans lequel l'unité d'émission de valeur de consommation (4) envoie en mode installation des télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, et envoie après l'envoi d'un télégramme d'annonce (A) ou de plusieurs télégrammes d'annonce (A) au moins un télégramme d'installation (I) ainsi annoncé.

11. Procédé selon la revendication 10, dans lequel l'unité d'émission de valeur de consommation (4) envoie en mode installation des télégrammes d'annonce (A) dans un intervalle de temps respectivement d'un maximum de 25 secondes, en particulier dans un intervalle de temps respectivement d'un maximum de 20 secondes, de préférence dans un intervalle de temps respectivement d'un maximum de 15 secondes, de manière particulièrement préférée dans un intervalle de temps respectivement d'un maximum de 10 secondes, qui annoncent l'envoi suivant du même au moins un télégramme d'installation (I), et envoie ensuite ledit au moins un télégramme d'installation (I) annoncé par ces télégrammes d'annonce (A).

12. Procédé selon la revendication 10 ou 11, dans lequel en mode installation de l'unité de réception de valeur de consommation (3), une disponibilité de réception (E) de l'unité de réception de valeur de consommation (3) est activée et désactivée à plusieurs reprises.

13. Procédé selon la revendication 12, dans lequel la disponibilité de réception (E) est activée dans un intervalle de temps respectivement d'au moins 30 secondes et au maximum de trois minutes ou de quatre minutes, en particulier dans un intervalle de temps respectivement de 30 secondes ou d'une minute ou de 90 secondes ou de deux minutes ou de trois minutes ou de quatre minutes.

14. Procédé selon la revendication 12 ou 13, dans lequel la disponibilité de réception (E) est désactivée après l'activation respective après 30 secondes maximum, en particulier après 25 secondes maximum, de préférence après 20 secondes maximum, de manière particulièrement préférée après 15 secondes maximum, avantageusement après 10 secondes maximum.
